(19) Europäisches Patentamt
European Patent Office
Office européen des brevets

(11) **EP 4 044 500 B1**

(12) **EUROPEAN PATENT SPECIFICATION**

(45) Date of publication and mention
of the grant of the patent:
**16.08.2023 Bulletin 2023/33**

(21) Application number: **20883150.3**

(22) Date of filing: **23.10.2020**

(51) International Patent Classification (IPC):
*H04L 9/08* (2006.01)   *H04L 9/14* (2006.01)
*H04L 9/32* (2006.01)   *G06F 21/57* (2013.01)
*G06F 21/64* (2013.01)   *G06F 21/73* (2013.01)

(52) Cooperative Patent Classification (CPC):
**H04L 9/3268; G06F 21/575; G06F 21/64;
G06F 21/73; H04L 9/0838; H04L 9/0897;
H04L 9/14**

(86) International application number:
**PCT/KR2020/014604**

(87) International publication number:
**WO 2021/085954 (06.05.2021 Gazette 2021/18)**

(54) **ELECTRONIC DEVICE FOR ENSURING INTEGRITY OF ELECTRONIC DEVICE INTRINSIC INFORMATION, AND OPERATING METHOD THEREFOR**

ELEKTRONISCHE VORRICHTUNG ZUR SICHERSTELLUNG DER INTEGRITÄT INTRINSISCHER INFORMATIONEN EINER ELEKTRONISCHEN VORRICHTUNG UND BETRIEBSVERFAHREN DAFÜR

DISPOSITIF ÉLECTRONIQUE POUR GARANTIR L'INTÉGRITÉ D'INFORMATIONS INTRINSÈQUES DE DISPOSITIF ÉLECTRONIQUE, ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2019 KR 20190134561**

(43) Date of publication of application:
**17.08.2022 Bulletin 2022/33**

(73) Proprietor: **Samsung Electronics Co., Ltd.
Gyeonggi-do, 16677 (KR)**

(72) Inventors:
• **LEE, Gawon**
  **Gyeonggi-do, 16677 (KR)**
• **KIM, Yangkeun**
  **Gyeonggi-do, 16677 (KR)**
• **LEE, Seunghoon**
  **Gyeonggi-do, 16677 (KR)**
• **LEE, Jonghyeon**
  **Gyeonggi-do, 16677 (KR)**
• **KIM, Jongsu**
  **Gyeonggi-do, 16677 (KR)**
• **YU, Hyungseok**
  **Gyeonggi-do, 16677 (KR)**

(74) Representative: **Nederlandsch Octrooibureau
P.O. Box 29720
2502 LS The Hague (NL)**

(56) References cited:
**KR-A- 20140 082 542      KR-A- 20170 084 934
KR-A- 20190 063 264      US-A1- 2018 097 639
US-A1- 2019 166 116**

• **Kim Yeon-Geun, Et Al.: "SIOT : Secure Gateway
for Internet of Things", The Journal of the Korean
Institute of Communications and Information
Sciences(Information & communications
magazine, KST, vol. 34227, no. 21, 1 February
2017 (2017-02-01), pages 80-89, XP055808296,**
• **Kim, Byoung-Seon; Cho, Jin-Sung: "Secure Pi :
COTS IoT Device Security Platform",
Transactions of Korean Institute of Information
Scientists And Engineers Conference (see
section 3), 1 December 2015 (2015-12-01), pages
437-439, XP009527760,**

## Description

[Technical Field]

The disclosure relates to an electronic device for guaranteeing integrity of unique information of the electronic device and a method of operating the same.

[Background Art]

An electronic device may have a security key signed by a reliable certificate authority and a certificate so as to provide various security-related services. For example, the electronic device may transmit unique information of the electronic device injected by a manufacturer and the security key to the certificate authority to make a request for generating a certificate and receive a certificate bound with the unique information of the electronic device and the security key from the certificate authority. The electronic device may provide various security-related services by proving integrity of the unique information of the electronic device through the certificate bound with the unique information of the electronic device and the security key.

Meanwhile, the manufacturer of the electronic device may insource electronic devices or cooperate with a third party to produce electronic devices through outsourcing.

US 2019/166116 A1 and US 2018/097639 A1 are further prior art.

[Disclosure of Invention]

[Technical Problem]

When an electronic device is produced through outsourcing, it is difficult to inject unique information of the electronic device and a security key into the electronic device during a process step. For example, it is difficult to provide a security key to an outsourcing company due to a security problem, and separate costs for managing the security key is needed although the security key is provided to the outsourcing company, and thus, now it is difficult to inject the unique information and the security key into the electronic device produced through outsourcing during the process step. Accordingly, the electronic device does not have a certificate bound with the security key and the unique information, thereby cannot prove integrity thereof. When integrity of the electronic device is not proved, various security-related services cannot be provided.

Accordingly, various embodiments of the disclosure disclose a method and an apparatus for guaranteeing integrity for unique information of the electronic device by the electronic device.

The technical subjects pursued in the disclosure are not limited to the above mentioned technical subjects, and other technical subjects which are not mentioned may be clearly understood through the following descriptions by those skilled in the art of the disclosure.

[Solution to Problem]

The present invention is defined by the appended independent claims. Preferred embodiments are set forth in the dependent claims.

According to various embodiments, an electronic device includes a security chipset configured to store a certificate and a pair of security keys corresponding to the certificate, a processor operatively connected to the security chipset, and a memory operatively connected to the processor, wherein the memory stores instructions causing the processor to, when executed, inject at least one authentication key and unique information of the electronic device into the security chipset through a boot loader and control the security chipset to generate signature data by using at least one of the at least one injected authentication key, the injected unique information of the electronic device, or the pair of security keys.

According to various embodiments, a method of operating an electronic device includes injecting at least one authentication key and unique information of the electronic device into a security chipset configured to store a certificate and a pair of security keys corresponding to the certificate through a boot loader, and controlling the security chipset to generate signature data by using at least one of the at least one authentication key, the unique information of the electronic device, or the pair of security keys.

[Advantageous Effects of Invention]

According to various embodiments, the electronic device may store unique information of the electronic device in a security chipset through a reliable secure channel, sign a message including the stored unique information of the electronic device with a security key injected during a process, and transmit the message to a server, thereby proving and guaranteeing integrity of unique information of the electronic device. The electronic device may provide various security services by using a certificate corresponding to the unique information of the electronic device and the security key of which integrity is proved.

[Brief Description of Drawings]

FIG. 1 is a block diagram illustrating an electronic device within a network environment according to various embodiments.

FIG. 2 is a block diagram illustrating the structure of communication between a security chipset within the electronic device and at least one other element according to various embodiments.

FIG. 3 is a flowchart illustrating a process in which the electronic device generates signed data by binding unique information of the electronic device with a security key according to various embodiments.

FIG. 4 is a flowchart illustrating a process in which the electronic device stores a boot loader authentication key and state information of the electronic device in the security chipset according to various embodiments.

FIG. 5 is a signal flowchart illustrating a process in which the electronic device stores the boot loader authentication key and state information of the electronic device in the security chipset according to various embodiments.

FIG. 6 is a flowchart illustrating a process in which the electronic device shares a manager authentication key with the security chipset according to various embodiments.

FIGs. 7A and 7B are signal flowcharts illustrating a process in which the electronic device shares the manager authentication key with the security chipset according to various embodiments.

FIG. 8 is a flowchart illustrating a process in which the electronic device stores unique information of the electronic device in the security chipset according to various embodiments.

FIG. 9 is a signal flowchart illustrating a process in which the electronic device stores unique information of the electronic device in the security chipset according to various embodiments.

FIG. 10A is a flowchart illustrating a process in which the electronic device proves integrity for unique information of the electronic device according to various embodiments.

FIG. 10B is a flowchart illustrating a process in which the server proves integrity for unique information of the electronic device according to various embodiments.

FIG. 11A is a flowchart illustrating a process in which the electronic device proves integrity for unique information of the electronic device according to various embodiments.

FIG. 11B is a flowchart illustrating a process in which the server proves integrity for unique information of the electronic device according to various embodiments.

[Mode for Carrying out the Invention]

Hereinafter, various embodiments of the disclosure will be described with reference to the accompanying drawings. The embodiments and the terms used herein are not intended to limit the technology disclosed herein to specific implementation forms, and should be understood to include various modifications, equivalents, and/or alternatives to the corresponding embodiments. In describing the drawings, similar reference numerals may be used to designate similar elements. A singular expression may include a plural expression unless they are definitely different in context.

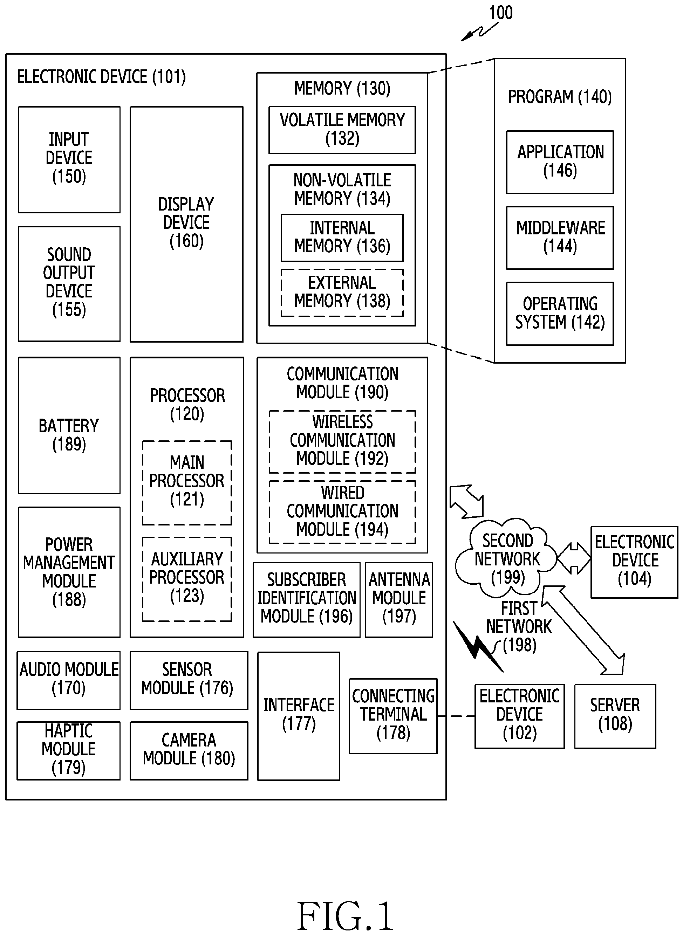

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

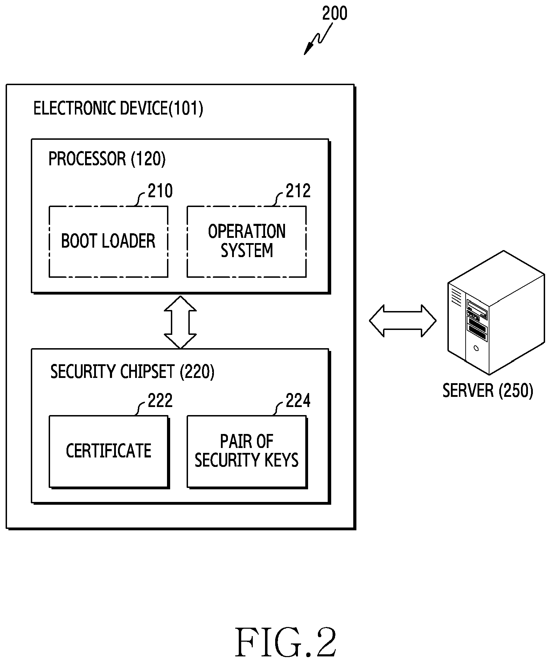

FIG. 2 is a block diagram 200 illustrating a communication structure between a security chipset within an electronic device and at least one other element according to various embodiments. The electronic device 101 of FIG. 2 may be the electronic device 101 of FIG. 1. According to an embodiment, at least one other element may be the processor 120 of FIG. 1.

Referring to FIG. 2, when detecting a booting event, the processor 120 (for example, the processor 120 of FIG. 1) according to various embodiments may execute a boot loader 210 stored in a boot ROM. According to an embodiment, the processor 120 may initialize at least one element included in the electronic device 101 through the executed boot loader 210 and execute at least one of various demons required for the framework operation. The processor 120 may monitor the current state of the electronic device through the executed boot loader 210 to acquire state information and check integrity of the electronic device on the basis of the acquired state information. According to an embodiment, the processor 120 may communicate with the security chipset 220 using at least one interface through the boot loader 210 during the booting operation. The processor 120 may provide (or inject) a boot loader authentication key (or a first authentication key) and processor identification information to the security chipset 220 by using the boot loader 210 during the initial booting operation. The boot loader authentication key may be a symmetric key cipher-based key. The boot loader authentication key may be a value which only the boot loader 210 can know unlike the existing key injected during a chip process step. The processor identification information may include an ID of an application processor or include a value induced from the ID of the application processor through a predetermined scheme. The initial booting operation may include at least one of a step of booting the electronic device by injecting a process binary into the electronic device or a step of booting the electronic device by injecting a user binary into the electronic device. The processor 120 may perform a procedure of identifying the security chipset 220 and the boot loader authentication key to check whether the boot loader authentication key is successfully shared. According to an embodiment, the processor 120 may establish a secure channel between the processor 120 and the security chipset 220 by using the boot loader authentication key during the booting operation and provide (or inject) state information of the electronic device to the security chipset 220 through the established secure channel. The secure channel may be, for example, a communication channel that guarantees at least one of confidentiality, integrity, or authenticity through encryption of a communication section. For example, the secure channel may include at least one of SCP03 or SCP11 of Global Platform Card Specification. The state information of the electronic device may include root of trust (RoT) information. The RoT information may include at least one of a verified boot state, information indicating whether the electronic device is locked, an operating system version, a patch time point, or a patch level. The processor 120 may provide the state information of the electronic device to the security chipset 220 during the booting operation whenever the electronic device 101 is booted.

According to various embodiments, when the booting operation is completed, the processor 120 may execute a security management application (or app) through the operating system 212 and perform control to provide various security-related services. According to an embodiment, when the initial booting operation is completed, the processor 120 may share the security chipset 220 and a manager authentication key (or a second authentication key) through the security chipset management demon and/or the security management application. The processor 120 may generate and/or share the manager authentication key on the basis of the processor identification information shared with the security chipset 220 during the booting operation. According to an embodiment, when sharing of the manager authentication key is completed, the processor 120 may establish a secure channel with the security chipset 220 through the security management application and provide (or inject) unique information of the electronic device to the security chipset 220 through the secure channel. The unique information of the electronic device may include at least one of a universal flash storage (UFS) serial number (SN), a serial number (SN) of the electronic device, an embedded multimedia card serial number (eMMC SN), or an international mobile equipment identity (IMEI).

According to various embodiments, the security chipset 220 may generate, store, and/or manage information sensitive to security. The security chipset 220 may store and/or manage application programs providing, for example, a credit card payment service or a transportation card service and may store and/or manage information related to a personal identify or a credential and/or various certificates (or authentication certificates). The security chipset 220 may be implemented as an independent circuit and may include a separate processor. The security chipset 220 includes a separate processor but may operate according to the control of the processor 120. For example, the security chipset 220 may operate dependently on the processor 120. The security chipset 220 may be referred to as a secure element.

According to various embodiments, the security chipset 220 may include a certificate 222 and a pair of security keys 224 corresponding to the certificate 222. The pair of security keys 224 may include a pair of encryption keys of public key-based cipher. For example, the pair of security keys 224 may include a public key (for example, attestPK) which can be made public and a private key (for example, attestSK) which cannot be made public. According to an embodiment, the certificate 222 and the pair of security keys 224 may be issued by a certificate authority of a manufacturer and may be injected into the security chipset 220 during a process step of the security chipset 220. According to an embodiment, the certificate 222 and the pair of security keys 224 may be safely protected by being injected into the security chipset 220 by a designer and/or a manufacturer at a wafer level during a process of the security chipset 220.

According to an embodiment, the security chipset 220 may receive the boot loader key and the processor identification information from the processor 120 during the initial booting operation of the electronic device 101. The security chipset 220 may identify whether the boot loader authentication key is successfully shared by performing a procedure of identifying the boot loader authentication key with the processor 120. When the boot loader authentication key is successfully shared, the security chipset 220 may store the boot loader authentication key and the processor identification information in a predetermined area (for example, a one-time area) within the security chipset 220. The predetermined area within the security chipset 220 may include an area in which stored information cannot be changed and/or deleted among areas of a memory (not shown) included in the security chipset 220. For example, data stored in the predetermined area within the security chipset 220 may be changed or deleted.

According to an embodiment, the security chipset 220 may establish a secure channel with the boot loader 210 of the processor 120 by using the boot loader authentication key and receive state information of the electronic device through the established secure channel. The security chipset 220 may store the received state information of the electronic device in the predetermined area (for example, a one-time area) within the security chipset 220. According to an embodiment, the state information of the electronic device may be received and stored whenever the electronic device 101 performs the booting operation.

According to an embodiment, when the initial booting operation of the electronic device 101 is completed, the security chipset 220 may share the manager authentication key with the processor 120. The security chipset 220 may identify whether the manager authentication key is successfully shared and, when the manager authentication key is successfully shared, store the manager authentication key in the predetermined area (for example, the one-time area) within the security chipset 220. The security chipset 220 may establish a secure channel with the security management application being executed by the processor 120 using the manager authentication key and receive unique information of the electronic device through the secure channel. The security chipset 220 may store the received unique information of the electronic device in the predetermined area (for example, the one-time area) within the security chipset 220.

According to an embodiment, the security chipset 220 may receive a device authentication request signal from the processor 120. The security chipset 220 may generate a message including at least one of the unique information of the electronic device stored in the predetermined area within the security chipset 220 or the state information of the electronic device in response to reception of the device authentication request signal and sign the generated message with the private key (attestSK) of the pair of security keys to generate signature data. The signature data may have various formats (or structures). For example, the signed data may be a certificate (for example, RFC5280) format or a signed data (for example, RFC5652, pkcs#7) format. This is only an example, and various embodiments of the disclosure are not limited thereto. The security chipset 220 may transmit the signature data and pre-injected certificate to the server 250 through the processor 120 and/or a communication module (for example, the communication module 190 of FIG. 1).

According to various embodiments, the server 250 may authenticate the electronic device 101. According to an embodiment, the server 250 may generate random challenge, transmit a device authentication request signal including the generated random challenge to the electronic device 101, and receive signature data and a certificate from the electronic device 101. The server 250 may verify the received signature data and certificate by using the certificate of the certificate authority (for example, a certificate of a manufacturer certificate authority or a certificate issued by the manufacturer certificate authority) and the public key (attestPK). When the signature data and the certificate are successfully verified, the server 250 may acquire at least one piece of the unique information of the electronic device or the state information of the electronic device.

According to various embodiments, the electronic device 101 may include a security chipset (for example, the security chipset 220 of Fig. 2) configured to store a certificate and a pair of security keys corresponding to the certificate, a processor (for example, the processor 120 of FIG. 2) operatively connected to the security chipset 220, and a memory (for example, the memory 130 of FIG. 1) operatively connected to the processor 120, and the memory 130 may store instructions causing the processor 120 to, when executed, inject at least one authentication key and unique information of the electronic device into the security chipset 220 through a boot loader (for example, the boot loader 210 of FIG. 2) and control the security chipset 220 to generate signature data by using at least one of the at least one injected authentication key, the injected unique information of the electronic device, or the pair of security keys.

According to an embodiment the instructions may cause the processor 120 to inject the unique information of the electronic device into the security chipset 220 during a booting operation using the boot loader 210, and the unique information of the electronic device is stored in a predetermined area within the security chipset 220.

According to an embodiment, the predetermined area within the security chipset may include an area having attributes corresponding to impossibility of deletion or change of stored information.

According to an embodiment, the unique information of the electronic device may include at least one of identification information of the processor, a universal flash storage (UFS) serial number (SN), a serial number of the electronic device, an embedded multimedia card serial number (eMMC SN), or an international mobile equipment identity (IMEI).

According to an embodiment, the instructions may cause the processor 120 to establish a secure channel with the security chipset 220 by using the at least one authentication key and inject the unique information of the electronic device into the security chipset 220 through the established secure channel. According to an embodiment, the instructions may cause the processor 120 to establish a secure channel between the boot loader 210 and the security chipset 220 by using a first authentication key during the booting operation and provide state information of the electronic device 101 to the security chipset 220 through the secure channel established between the boot loader 210 and the security chipset 220, the security chipset 220 may be configured to store the state information of the electronic device 101 in the security chipset 220, and the state information of the electronic device 101 may include at least one of a verified boot state, information indicating whether the electronic device 101 is locked, an operating system version, a patch time point, or a patch level.

According to an embodiment, when the booting operation is completed, the instructions may cause the processor 120 to share a second authentication key with the security chipset 220, based on identification information of the processor 230 through a security management application, establish a secure channel between the security management application and the security chipset 220 by using the shared second authentication key, and provide the unique information of the electronic device 101 to the security chipset 220 through the secure channel established between the security management application and the security chipset 220.

According to an embodiment, the instructions may cause the processor 120 to generate a first pair of temporary keys through the security management application and provide a first temporary public key in the generated first pair of temporary keys to the security chipset 220, and the security chipset 220 may be configured to generate a second pair of temporary keys including a second temporary public key and a second temporary private key, generate the second authentication key, based on at least one of the first temporary public key, the second temporary public key, identification information of the processor, or identification information of the security chipset 220, acquire a first receipt to be used for verifying the second authentication key by using the generated second authentication key, and provide at least one of the first receipt, the identification information of the security chipset 220, or the second temporary public key generated by the security chipset 220 to the processor 120.

According to an embodiment, the instructions may cause the processor 120 to receive at least one of the first receipt, the identification information of the security chipset 220, or the second temporary public key generated by the security chipset 220 from the security chipset 220, generate the second authentication key, based on at least one of the second temporary public key, the identification information of the processor 120, or the identification information of the security chipset 220, acquire a second receipt corresponding to the generated second authentication key, and compare the received first receipt and the second receipt to determine whether the second authentication is successfully shared with the security chip set 220.

According to an embodiment, when the unique information of the electronic device 101 is received from the processor 120, the security chipset 220 may be configured to determine whether the electronic device 101 is in a normal state, based on the state information of the electronic device 101 stored in the security chipset 220 and, when the electronic device 101 is in the normal state, store the unique information of the electronic device 101 in a predetermined area within the security chipset 220.

According to an embodiment, the electronic device may further include a communication module (for example, the communication module 190 of FIG. 1) operatively connected to the processor 120, and the instructions may cause the processor 120 to transmit a service request signal to a server (for example, the server 250 of FIG. 2) through the communication module 190, receive a device authentication request signal from the server 250 through the communication module 190, and make a request for generating signature data to the security chipset 220, and the security chipset 220 may be configured to generate signature data by signing a message including the unique information of the electronic device 101 with a private key in the pair of security keys.

According to an embodiment, the instructions may cause the processor 230 to control the communication module 190 to transmit the signature data generated by the security chipset 220 to the server 250.

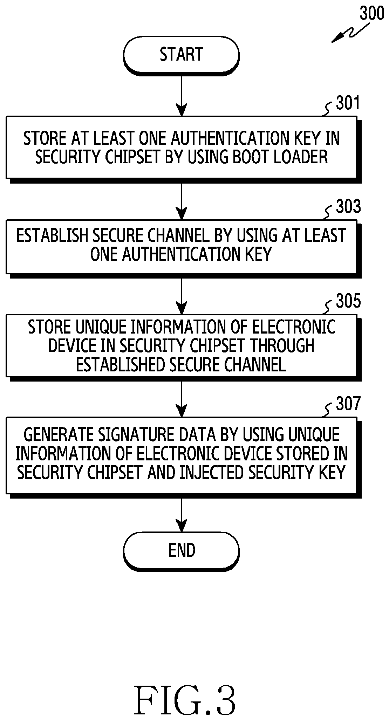

FIG. 3 is a flowchart 300 illustrating a process in which the electronic device binds unique information of the electronic device and a security key to generate signed data according to various embodiments. In the following embodiments, respective operations may be sequentially performed but the sequential performance is not necessary. For example, orders of the operations may be changed, and at least two operations may be performed in parallel. The electronic device may be the electronic device 101 of FIG. 2. In the following embodiments of the disclosure, the binding may be a configuration of at least two objects (for example, unique information of the electronic device and a security key) to have the correlation.

Referring to FIG. 3, in operation 301, an electronic device (for example, the processor 120 of FIG. 2 and/or a security chipset (for example, the security chipset 220 of FIG. 2)) according to various embodiments may inject (or store) at least one authentication key into the security chipset 220 by using a boot loader (for example, the boot loader 210 of FIG. 2). According to an embodiment, the processor 120 may provide (or inject) processor identification information and a boot loader authentication key to the security chipset 220 by using the boot loader 210 during the initial booting operation of the electronic device 101. The security chipset 220 may store the processor identification information and the boot loader authentication key in a predetermined area within the security chipset 220. The predetermined area may include an area in which stored information cannot be deleted and/or changed. The processor 120 may establish a secure channel with the security chipset 220 by using the boot loader authentication key and provide (or inject) the current state information of the electronic device to the security chipset 220 through the secure channel. The security chipset 220 may store the current state information of the electronic device in a predetermined area within the security chipset 220. According to an embodiment, when completion of the initial booting operation is detected, the processor 120 may share a manger authentication key with the security chipset 220 through a security management application. The processor 120 may share the manager authentication key with the security chipset 220 on the basis of the processor identification information. The security chipset 220 may store the shared manager authentication key in the predetermined area within the security chipset 220.

According to various embodiments, in operation 303, the electronic device (for example, the processor 120 and/or the security chipset 220) may establish a security channel with the security chipset 220 by using at least one authentication key. For example, the processor 120 may establish a secure key with the security chipset 220 by using the manager authentication key shared between the security management application and the security chipset 220.

According to various embodiments, in operation 305, the electronic device (for example, the processor 120 and/or the security chipset 220) may store unique information of the electronic device in the security chipset 220 through the established secure channel. For example, the processor 120 may provide (or inject) the unique information of the electronic device to the security chipset 220 through the secure channel established using the manager authentication key. The security chipset 220 may store the unique information of the electronic device in the predetermined area within the security chipset 220. The unique information of the electronic device may include at least one of a universal flash storage serial, a serial number, or an international mobile equipment identity (IMEI). The processor 120 may bind the electronic device 101 with the security chipset 220 by storing the unique information of the electronic device in the predetermined area within the security chipset 220.

According to various embodiments, in operation 307, the electronic device (for example, the processor 120 and/or the security chipset 220) may generate signature data by using unique information of the electronic device stored in the security chipset 220 and the pair of pre-injected security keys. For example, the processor 120 may receive a device authentication request signal from a server (for example, the server 250 of FIG. 2) and transfer the device authentication request signal to the security chipset 220. The security chipset 220 may generate a message including at least one piece of the unique information of the electronic device stored in the predetermined area within the security chipset 220 and the state information of the electronic device on the basis of the signal received from the processor 120 and sign the generated message with the private key (attestSK) in the pair of security keys so as to generate signature data (or signature value). According to an embodiment, the processor 120 may control a communication module (for example, the communication module 190 of FIG. 1) to transmit the signature data generated by the security chipset 220 to the server 250.

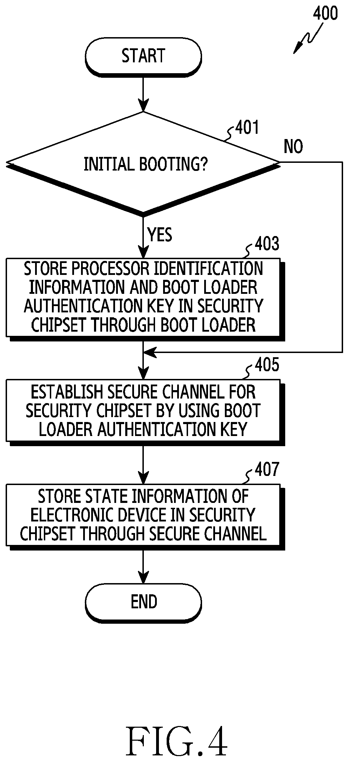

FIG. 4 is a flowchart 400 illustrating a process in which the electronic device stores the boot loader authentication key and state information of the electronic device according to various embodiments. Operations of FIG. 4 described below may be at least a portion of the detailed operation in operation 301 of FIG. 3. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 4, in operation 401, the electronic device (for example, the processor 120 of FIG. 2) according to various embodiments may determine whether an initial booting operation is performed. For example, when detecting a booting event, the processor 120 may execute the boot loader (for example, the boot loader 210 of FIG. 2) and perform the booting operation of the electronic device 101 through the executed boot loader 210. The processor 120 may determine whether the booting operation of the electronic device 101 is the initial booting operation. The initial booting operation may include at least one of a step of booting the electronic device by inserting a process binary into the electronic device or a step of booting the electronic device by inserting a user binary into the electronic device.

According to various embodiments, when the booting operation is the initial booting operation, the electronic device (for example, the processor 120 and/or the security chipset 220 of FIG. 2) may store processor identification information and the boot loader authentication key to the security chipset 220 by using the boot loader in operation 403. For example, during the initial booting operation, the processor 120 may provide (or inject) the processor identification information and the boot loader authentication key to the security chipset 220 through the boot loader 210. After providing the processor identification information and the boot loader authentication key to the security chipset 220, the processor 120 may perform a procedure of identifying the boot loader authentication key. According to an embodiment, the processor 120 may identify whether the boot loader authentication key received by the security chipset 220 is the same as the boot loader authentication key provided by the processor 120 through a message authentication code (MAC) algorithm. For example, the processor 120 may encrypt a pre-appointed message with the boot loader authentication key and provide the encrypted message to the security chipset 220. The security chipset 220 may encrypt a pre-appointed message with the boot loader authentication key, compare the encrypted message with the encrypted message received from the processor 120, and determine whether the boot loader authentication key received by the security chipset 220 is the same as the boot loader authentication key provided by the processor 120. When the encrypted message is the same as the encrypted message received from the processor 120, the security chipset 220 may determine that the encrypted message received by the security chipset 220 is the same as the encrypted message received from the processor 120 and the processor 120 and/or the security chipset 220 may determine that the boot loader authentication key is successfully shared. In another example, the security chipset 220 may encrypt a pre-appointed message with the boot loader authentication key received from the processor 120 and provide the encrypted message to the processor 120. The processor 120 may encrypt a pre-appointed message with the boot loader authentication key, compare the encrypted message with the encrypted message received from the security chipset 220, and determine whether the boot loader authentication key received by the security chipset 220 is the same as the boot loader authentication key provided by the processor 120. When the processor 120 identifies that the boot loader authentication key received by the security chipset 220 is the same as the boot loader authentication key provided by the processor 120, the processor 120 may provide a signal indicating that the boot loader authentication key is successfully shared to the security chipset 220. When the boot loader authentication key is successfully shared, the security chipset 220 may store the processor identification information and the boot loader authentication key in a predetermined area within the security chipset 220.

According to various embodiments, in operation 405, the electronic device (for example, the processor 120 and/or the security chipset 220) may establish a secure channel with the security chipset by using the boot loader authentication key. For example, the processor 120 and the security chipset 220 may establish a secure channel by using the boot loader authentication key during the booting operation. According to an embodiment, the processor 120 may establish a secure channel with the security chipset 220 by using the boot loader authentication key shared during the initial booting whenever the electronic device 101 is booted.

According to various embodiments, in operation 407, the electronic device (for example, the processor 120 and/or the security chipset 220) may store state information of the electronic device in the security chipset through the established secure channel. The processor 120 may acquire state information indicating the current state of the electronic device during the booting operation and provide (or inject) the acquired state information to the security chipset 220 through the secure channel. The security chipset 220 may store the state information of the electronic device received through the secure channel in a predetermined area of the security chipset 220.

When it is determined that the boot loader authentication key is not successfully shared in operation 403 of FIG. 4, for example, when the message encrypted by the security chipset 220 is different from the encrypted message received from the processor 120, the security chipset 220 may provide an error message to the processor 120 without performing operations 405 and 407. Although not illustrated, when receiving the error message from the security chipset 220, the processor 120 may output a message or an indicator indicating a security-related error occurs during the booting operation or after the booting operation, so as to inform, the designer, the manufacturer, or the user of the error situation.

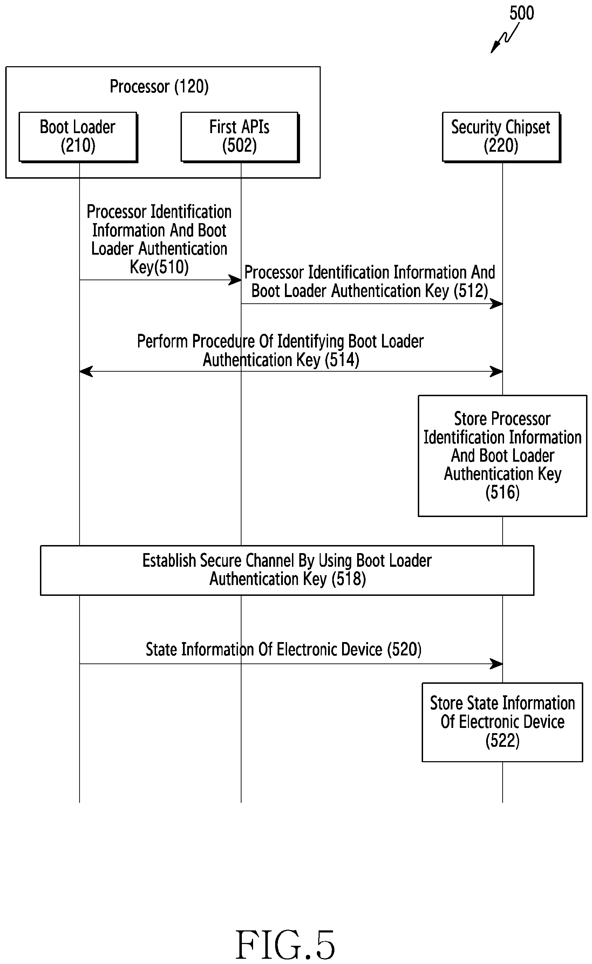

FIG. 5 is a signal flowchart 500 illustrating a process in which the electronic device stores the boot loader authentication key and state information of the electronic device according to various embodiments. Operations of FIG. 5 described below may be the detailed operations of FIG. 4. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 5, the boot loader 210 of the processor 120 according to various embodiments may transmit processor identification information and the boot loader authentication key to the security chipset 220 through first application programming interfaces (APIs) 502 in operations 510 and 512. The first APIs 502 may include at least one interface configured to communicate with the security chipset 220. At least one interface may include, for example, a serial peripheral interface (SPI) or an inter integrated circuit (I2C) interface. The listed interfaces are only for helping understanding and various embodiments of the disclosure are not limited thereto.

According to various embodiments, the security chipset 220 may receive processor identification information and the boot loader authentication key from the processor 120 in operation 512 and perform a procedure of identifying the boot loader authentication key in operation 514. The security chipset 220 may determine whether the boot loader 210 and the security chipset 220 have successfully shared the boot loader authentication key through the procedure of identifying the boot loader authentication key. The procedure of identifying the boot loader authentication key may be performed as illustrated in operation 403 of FIG. 4.

According to various embodiments, when it is identified that the boot loader authentication key is successfully shared, the security chipset 220 may store the processor identification information and the boot loader authentication key in the predetermined area of the security chipset 220 in operation 516.

According to various embodiments, the processor 120 and the security chipset 220 may establish a secure channel by using the boot loader authentication key in operation 518. The secure channel may support at least one of authentication of the processor 120 and the security chipset 220, confidentiality of a transmitted message, integrity, or authenticity. According to various embodiments, in operation 520, the processor 120 may provide state information of the electronic device to the security chipset 220 through the established secure channel, and the security chipset 220 may store the state information of the electronic device in the predetermined area in operation 522. Operations 518, 520, and 522 of FIG. 5 may be the same as operations 405 and 407 of FIG. 4.

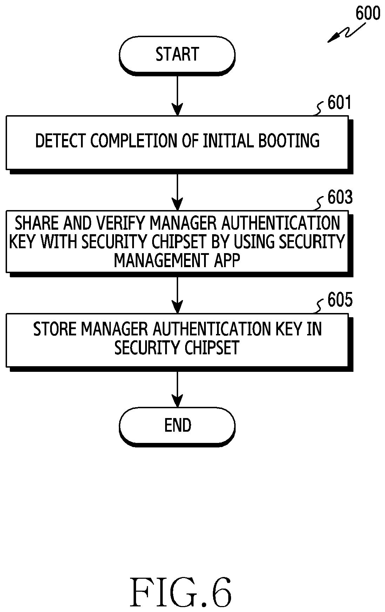

FIG. 6 is a flowchart 600 illustrating a process in which the electronic device shares a manager authentication key with the security chipset according to various embodiments. Operations of FIG. 6 described below may be at least a portion of the detailed operation in operation 301 of FIG. 3. Operations of FIG. 6 may be performed after the operations of FIG. 4. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 6, the electronic device (for example, the processor 120 of FIG. 2) according to various embodiments may detect completion of the initial booting operation in operation 601.

According to various embodiments, the electronic device (for example, the processor 120 and/or the security chipset 220 of FIG. 2) may share and verify a manager authentication key with the security chipset 220 through a security management application in operation 603. According to an embodiment, when the initial booting operation using a boot loader (for example, the boot loader 210 of FIG. 2) is completed, the processor 120 may execute the security management application through the operating system 212. The security management application may be an application executed in a trusted execution environment (TEE) of the operating system 212. According to an embodiment, the processor 120 may detect the need of sharing of the manager authentication key through the security management application and share at least one temporary key with the security chipset 220 so as to share the manager authentication key. For example, the processor 120 may generate a first pair of temporary keys through the security management application, and the security chipset 220 may generate a second pair of temporary keys. The first pair of temporary keys may include a first temporary public key and a first temporary private key. The second pair of temporary keys may include a second temporary public key and a second temporary private key. The processor 120 may transmit the first temporary public key in the first pair of temporary keys generated through the security management application to the security chipset 220 and provide the second temporary public key in the second pair of temporary keys to the processor 120. The processor 120 may generate the manager authentication key by using the received second temporary public key, and the security chipset 220 may generate the manager authentication key by using the received first temporary public key. The processor 120 and the security chipset 220 may generate and exchange receipts of the generated manager authentication keys and verify whether the manager authentication keys are successfully shared.

According to various embodiments, in operation 605, the electronic device (for example, the security chipset 220) may store the manager authentication key in a predetermined area within the security chipset 220. According to an embodiment, when the manager authentication key is shared and verified, the security chipset 220 may store the manager authentication key in the predetermined area within the security chipset 220.

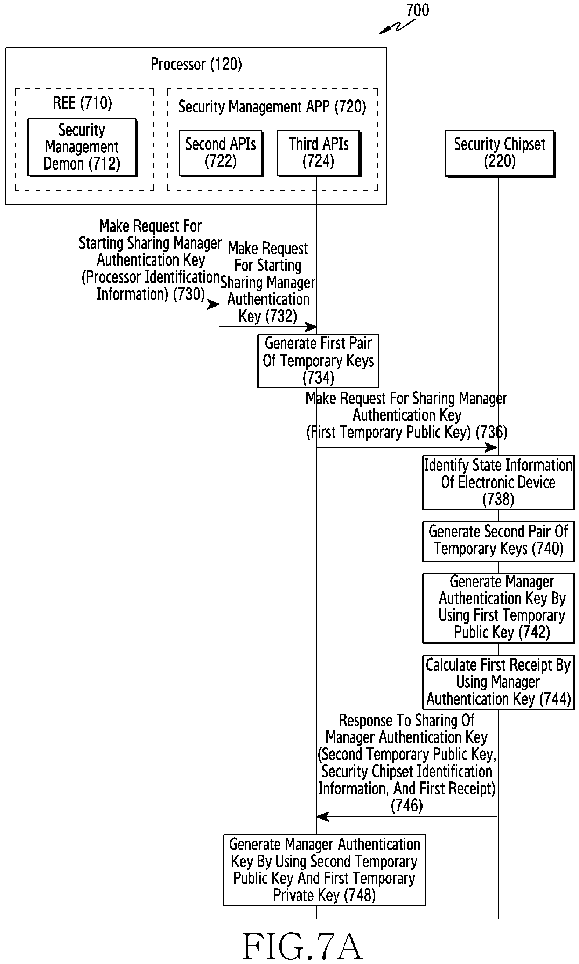

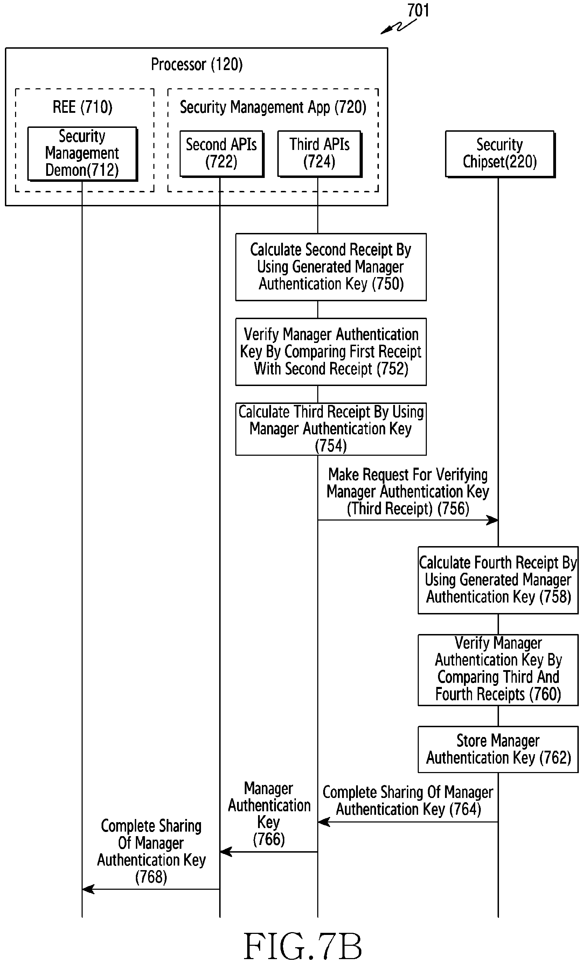

FIGs. 7A and 7B are signal flowcharts 700 and 701 illustrating a process in which the electronic device shares the manager authentication key with the security chipset according to various embodiments. Operations of FIGs. 7A and 7B described below may be the detailed operations of FIG. 6. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIGs. 7A and 7B, the processor 120 according to various embodiments may transmit a request for starting sharing the manager authentication key to a security management app 720 in operation 730 after the initial booting operation is completed using a security management demon 712. The security management demon 712 may operate in a rich operating system execution environment (REE) 710 of the processor 120. The signal making the request for starting sharing the manager authentication key may include processor identification information. The processor identification information may be processor identification information shared between the processor 120 and the security chipset 220 in FIGs. 4 and 5.

According to various embodiments, in operation 730, the security management app 720 operating in the TEE of the processor 120 may receive the signal making the request for starting sharing the manager authentication key from the security management demon 712 through second APIs 722. The second APIs 722 may include, for example, at least one API used for communication with the security management demon 712 in an area of an REE 710 among a plurality of APIs included in the security management app 720.

According to various embodiments, in operation 732, the security management app 720 may provide the signal making the request for starting sharing the manager authentication key to third APIs 724 which can communicate with the security chipset 220 through the second APIs 722. The third APIs 724 may include, for example, at least one API used for communication with the security chipset 220 among a plurality of APIs included in the security management app 720.

According to various embodiments, in operation 734, the security management app 720 may generate a first pair of temporary keys through the third APIs 724. The first pair of temporary keys may be randomly generated. The first pair of temporary keys may include a first temporary private key and a first temporary public key. According to various embodiments, the third APIs 724 of the security management app 720 may transmit a manager authentication key sharing request message including the first temporary public key in the first pair of temporary keys to the security chipset 220 in operation 736.

According to various embodiments, when receiving the manager authentication key sharing request message, the security chipset 220 may identify state information of the electronic device in operation 738. For example, the security chipset 220 may identify the stored state information of the electronic device during the booting operation and determine whether the state of the electronic device is a normal state. For example, when the verified booting state information is "green", the security chipset 220 may determine that the state of the electronic device is the normal state. According to an embodiment, when it is determined that the state of the electronic device is not the normal state, the security chipset 220 may transmit a signal indicating that the state of the electronic device is an abnormal state to the security management app 720 of the processor 120 without performing operation 740 and the following operations. Although not illustrated, when receiving the signal indicating that the state of the electronic device is the abnormal state from the security chipset 220, the processor 120 may stop the manager authentication key sharing operation and output a message or an indicator indicating that the state of the electronic device is abnormal, so as to inform the designer, the manufacturer, or the user of the abnormal state. According to an embodiment, when it is determined that the electronic device is in the normal state, the security chipset 220 may perform operation 740 below.

According to various embodiments, in operation 740, the security chipset 220 may generate a second pair of temporary keys. The second pair of temporary keys may be randomly generated. The second pair of temporary keys may include a second temporary private key and a second temporary public key. According to various embodiments, in operation 742, the security chipset 220 may generate a manager authentication key by using the first temporary public key received from the security management app 720. According to an embodiment, the security chipset 220 may generate a shared secret key by using the first temporary public key, the second temporary public key, and a Diffie-Hellman key agreement algorithm and acquire the manager authentication key by using the generated shared secret key. For example, the security chipset 220 may calculate the manager authentication key on the basis of at least one of the generated shared secret key, the processor identification information, and the security chipset identification information as shown in [Equation 1] below.

[Equation 1]

$$admin\_key = sha256(0x00000001\|Shs\|apID\|chipID)$$

In [Equation 1], admin_key denotes a manager authentication key, Shs denotes a shared secret key, apID denotes processor identification information, and chipID denotes security chipset identification information. According to an embodiment, the security chipset 220 may generate a shared secret key through another algorithm instead of the Diffie-Hellman key agreement algorithm. For example, the shared secret key may be generated using an elliptic curve Diffie-hellman key agreement (ECDH) algorithm.

According to various embodiments, in operation 744, the security chipset 220 may calculate a first receipt by using the manager authentication key. According to an embodiment, the security chipset 220 may calculate the first receipt by using the manager authentication key generated in operation 742, the security chipset identification information, and the processor identification information. For example, the security chipset 220 may calculate the first receipt through the MAC algorithm such as a hash-based message authentication code (HMAC) as illustrated in [Equation 2] below.

[Equation 2]

$$receipt = HmacSha256(admin\_key, chipID\|apID)$$

In [Equation 2], admin_key denotes a manager authentication key, chipID denotes security chipset identification information, and apID denotes processor identification information.

According to various embodiments, in operation 746, the security chipset 220 may transmit a manager authentication key sharing response signal to the security management app 720 of the processor 120. The manager authentication key sharing response signal may include the second temporary public key, the security chipset identification information, or the first receipt.

According to various embodiments, the security management app 720 of the processor 120 may receive the manager authentication key sharing response signal through the third APIs 724 and generate the manager authentication key by using the second temporary public key and the first temporary private key in operation 748. The second temporary public key may be acquired from the manager authentication key sharing response signal. According to an embodiment, the security management app 720 may generate a shared secret key by using the first temporary public key, the second temporary public key, and a Diffie-Hellman key agreement or elliptic curve Diffie-hellman key agreement algorithm and acquire the manager authentication key by using the generated shared secret key. For example, the security management app 720 of the processor 120 may calculate the manager authentication key on the basis of at least one of the generated shared secret key, the processor identification information, and the security chipset identification information as shown in [Equation 1] above.

According to various embodiments, in operation 750, the security management app 720 of the processor 120 may calculate a second receipt by using the generated manager authentication key. According to an embodiment, the security management app 720 may calculate the second receipt by using the manager authentication key generated in operation 748, the security chipset identification information received from the security chipset 220, and the processor identification information received from the security management demon 712. A method of calculating the second receipt may be the same as the method of calculating the first receipt. For example, the security management app 720 may calculate the second receipt through the algorithm as shown in [Equation 2] above.

According to various embodiments, in operation 752, the security management app 720 may compare the first receipt and the second receipt to verify the manager authentication key. For example, the security management app 720 may compare whether the first receipt calculated on the basis of the manager authentication key generated by the security chipset 220 is the same as the second receipt calculated on the basis of the manager authentication key generated by the security management app 720 and determine whether the same manager authentication keys are generated by the security management app 720 and the security chipset 220. When the first receipt and the second receipt are the same as each other, the security management app 720 may determine that the same manager authentication keys are generated by the security management app 720 and the security chipset 220 and determine that the manager authentication key is successfully verified. When the first receipt and the second receipt are different from each other, the security management app 720 may determine that the same manager authentication keys are not generated and determine that verification of the manager authentication keys has failed. According to an embodiment, when verification of the manager authentication keys has failed, the security management app 720 may output a message or an indicator indicating that the verification of the manager authentication keys has failed and inform the designer, the manufacturer, or the user of failure of the manager authentication key.

According to various embodiments, in operation 754, the security management app 720 may calculate a third receipt by using the manager authentication key. For example, when the manager authentication key is successfully verified, the security management app 720 may calculate the third receipt by using the manager authentication key generated in operation 748, and make a request for verifying the manager authentication key by transmitting the calculated third receipt to the security chipset 220 in operation 756. According to an embodiment, the security management app 720 may calculate the third receipt by using the generated manager authentication key, the security chipset identification information, and the processor identification information. For example, the security chipset 220 may calculate the third receipt through the MAC algorithm such as a hash-based message authentication code (HMAC) as illustrated in [Equation 3] below.

[Equation 3]

$$receipt = HmacSha256(admin\_key, apID \| chipID)$$

In [Equation 3], admin_key denotes a manager authentication key, apID denotes processor identification information, and chipID denotes security chipset identification information. [Equation 3] and [Equation 2] are different in that orders of the processor identification information and the security chipset identification information are different.

According to various embodiment, in operation 756, the security management app 720 may transmit a manager authentication key verification request signal including the third receipt to the security chipset 220.

According to various embodiments, in operation 758, the security chipset 220 may calculate a fourth receipt by using the manager authentication key generated in operation 744. A method of calculating the fourth receipt may be the same as the method of calculating the third receipt. For example, the security chipset 220 may calculate the fourth receipt through the algorithm as shown in [Equation 3] above.

According to various embodiments, in operation 760, the security chipset 220 may compare the third receipt with the fourth receipt to verify the manager authentication key. For example, the security chipset 220 may compare with the fourth receipt calculated on the basis of the manager authentication key generated by the security chipset 220 is the same as the third receipt calculated on the basis of the manager authentication key generated by the security management app 720 and determine whether the same manager authentication keys are generated by the security management app 720 and the security chipset 220. When the third receipt and the fourth receipt are the same as each other, the security chipset 220 may determine that the same manager authentication keys are generated by the security management app 720 and the security chipset 220 and determine that the manager authentication keys are successfully verified. When the third receipt and the fourth receipt are different from each other, the security chipset 220 may determine that the same manager authentication keys are not generated and determine that verification of the manager authentication keys has failed. According to an embodiment, when verification of the manager authentication keys has failed, the security management app 720 may output a message or an indicator indicating that the verification of the manager

EP 4 044 500 B1

authentication keys has failed and inform the designer, the manufacturer, or the user of failure of the manager authentication key.

According to various embodiments, in operation 762, the security chipset 220 may store the manager authentication key. For example, when the manager authentication key is successfully verified, the security chipset 220 may store the verified manager authentication key in a predetermined area within the security chipset 220. According to various embodiments, in operation 764, the security chipset 220 may transmit a signal indicating completion of sharing of the manager authentication key to the security management app 720.

According to various embodiments, when receiving the manager authentication key sharing completion signal from the security chipset 220, the third APIs 724 of the security management app 720 may transmit the manager authentication key to the second APIs 722 of the security management app 720 in operation 766. The second APIs 722 of the security management app 720 may perform wrap processing on the received manager authentication key. For example, the second APIs 722 of the security management app 720 may process security not to expose the manager authentication key. According to various embodiments, in operation 768, the second APIs 722 of the security management app 720 may transmit the manager authentication key sharing completion signal to the security management demon 712 in the area of the REE 710.

The processor identification information mentioned in FIGs. 7A and 7B may be the processor identification information illustrated in FIGs. 4 and 5. For example, the processor identification information mentioned in FIGs. 7A and 7B may be the processor identification information injected into the security chipset 220 by the boot loader (for example, the boot loader 210 of FIG. 5). The security management app 720 may generate a correct receipt by acquiring the processor identification information injected into the security chipset 220 by the boot loader 210 from the security management demon 712.

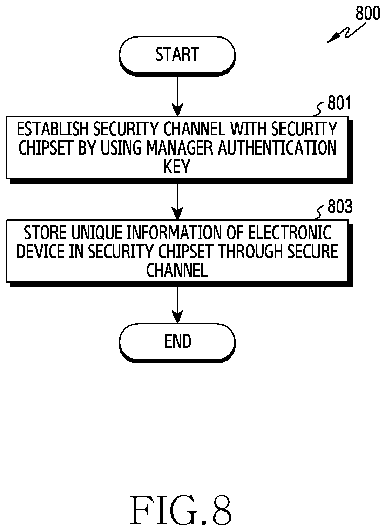

FIG. 8 is a flowchart 800 illustrating a process in which the electronic device stores unique information of the electronic device in the security chipset according to various embodiments. Operations of FIG. 8 below may be at least a portion of the detailed operations in operations 303 and 305 of FIG. 3. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 8, the electronic device (for example, the processor 120 of FIG. 2 and/or the security chipset 220 of FIG. 2) according to various embodiment may establish a secure channel with the security chipset by using a manager authentication key in operation 801. For example, the processor 120 may establish a secure channel between the processor 120 and the security chipset 220 by using a manager authentication key shared between the processor 120 and the security chipset 220 through the operations illustrated in FIG. 6 and/or FIGs. 7A and 7B. The secure channel may support at least one of authentication of the processor 120 and the security chipset 220, confidentiality of a transmitted message, integrity, or authenticity.

According to various embodiments, the electronic device (for example, the processor 120 and/or the security chipset 220) may store unique information of the electronic device in the security chipset through the secure channel in operation 803. According to an embodiment, the processor 120 may provide (or inject) the unique information of the electronic device to the security chipset 220 through the secure channel with the security chipset 220. When receiving the unique information of the electronic device from the processor 120 through the secure channel, the security chipset 220 may identify state information of the electronic device 101 and verify whether the electronic device 101 is in a normal state. When the electronic device 101 is in the normal state, the security chipset 220 may store the unique information of the electronic device received from the processor 120 in a predetermined area within the security chipset 220.

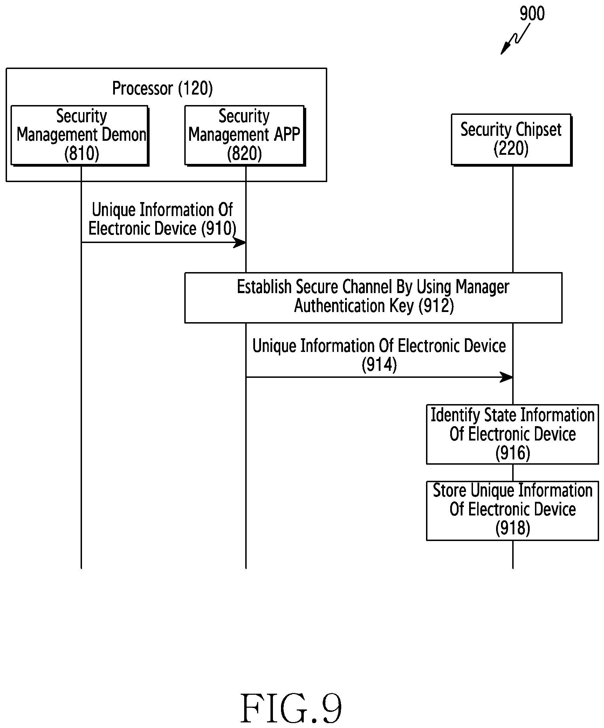

FIG. 9 is a signal flowchart 900 illustrating a process in which the electronic device stores unique information of the electronic device in the security chipset according to various embodiments. Operations of FIG. 9 described below may be the detailed operations of FIG. 8. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 9, the processor 120 according to various embodiments may provide unique information of the electronic device to a security management app 820 by using a security management demon 810 in operation 910. The security management demon 810 may operate in an REE of the processor 120 and the security management app 820 may operate in a TEE of the processor 120. The security management demon 810 may transmit a unique information injection request signal to the security management app 820. The unique information injection request signal may include unique information of the electronic device.

According to various embodiments, in operation 912, the security management app 820 executed in the TEE of the processor 120 and the security chipset 220 may establish a secure channel by using the manager authentication key. The manager authentication key may be pre-stored through, for example, the method as illustrated in FIG. 6 and/or FIGs. 7A and 7B.

According to various embodiments, in operation 914, the security management app 820 may provide (or inject)

14

unique information of the electronic device to the security chipset 220 through the secure channel.

According to various embodiments, when the unique information of the electronic device is received through the secure channel, the security chipset 220 may identify state information of the electronic device 101 and determine whether the state of the electronic device 101 is the normal state in operation 916. The state information of the electronic device 101 may be information stored in the security chipset 220 in a booting step of the electronic device 101. For example, the security chipset 220 may identify whether the verified booting state information stored in the security chipset 220 is "green" and, when the verified booting state information is "green", determine that the state of the electronic device is the normal state. When the verified booting state information is not "green", the security chipset 220 may determine that the electronic device 101 is in an abnormal state and transmit a signal indicating that the electronic device 101 is in the abnormal state to the security management app 820. When receiving the signal indicating that the electronic device 101 is in the abnormal state from the security chipset 220, the security management app 820 may stop the operation for injecting the unique information of the electronic device and output a message or an indicator indicating that the state of the electronic device is the abnormal state so as to inform the designer, the manufacturer, or the user of the abnormal state.

According to various embodiments, in operation 918, the security chipset 220 may store the unique information of the electronic device in a predetermined area (for example, a one-time area) within the security chipset 220. For example, when it is determined that the state of the electronic device is the normal state, the security chipset 220 may store the unique information of the electronic device in the predetermined area within the security chipset 220 and bind the unique information with the security key and the certificate injected into the security chipset 220 during the process step of the security chipset 220. For example, the security chipset 220 may correlate the unique information of the electronic device with the security key and the certificate and store them in the predetermined area within the security chipset 220. The predetermined area within the security chipset 220 may include a one-time area having a characteristic corresponding to impossibility of a change and/or deletion of stored information. The unique information of the electronic device stored in the predetermined area within the security chipset 220 cannot be deleted and/or changed due to the characteristic of the predetermined area.

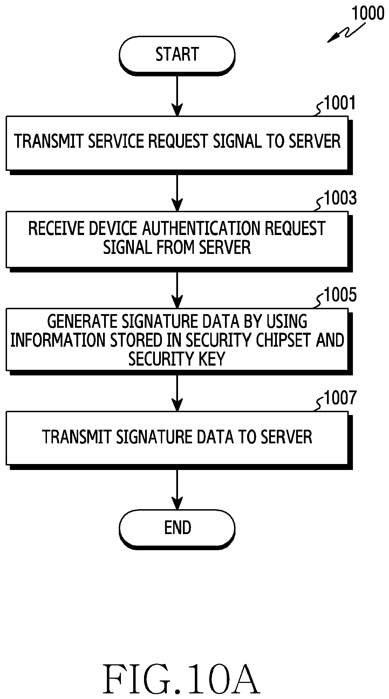

FIG. 10A is a flowchart 1000 illustrating a process in which the electronic device proves integrity of unique information of the electronic device according to various embodiments. At least some of the operations of FIG. 10A described below may be at least some of the detailed operations in operation 307 of FIG. 3. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 10A, the electronic device (for example, the processor 120 of FIG. 2 and/or the security chipset 220 of FIG. 2) according to various embodiments may transmit a service request signal to a server (for example, the server 250 of FIG. 2) in operation 1001. For example, the processor 120 may transmit a service request signal (or an authentication request signal) to the server 250 by a request from an application (for example, a payment application or a wireless firmware update (firmware over the air (FOTA) application) providing a service requiring device authentication. The service request signal may include unique information of the electronic device.

According to various embodiments, in operation 1003, the electronic device (for example, the processor 120 and/or the security chipset 220) may receive a device authentication request signal from the server 250. For example, the processor 120 may receive a device authentication request signal in response to transmission of the service request signal. The device authentication request signal may include challenge. According to an embodiment, when receiving the device authentication request signal through a communication module (for example, the communication module 190 of FIG. 1), the processor 120 may acquire challenge from the device authentication request signal through a security management application or another application which can access the security chipset 220. The processor 120 may transfer the challenge acquired through the security management application and the authentication request signal to the security chipset 220.

According to various embodiments, in operation 1005, the electronic device (for example, the security chipset 220) may generate signature data by using information stored in the security chipset and a security key. According to an embodiment, the security chipset 220 may generate signature data by signing a message including at least one of state information of the electronic device stored in the security chipset 220 in the booting step, unique information of the electronic device (or unique information of the electronic device stored in the predetermined area of the security chipset 220 after the security management application stored in the predetermined area of the security chipset 220 (for example, the security management apps 720 and 820 of FIGs. 7 and 8) performs authentication with a manager authentication key) in the initial booting step, challenge, or the security public key. The security public key and the security private key may be a pair of security keys injected into the security chipset 220 during the process step of the security chipset 220. The signature data may have various formats. For example, the signature data may be a certificate (for example, RFC5280 or X.509) format or a signed data (for example, public-key cryptography standard (PKCS) #7, RFC5652) format.

According to various embodiments, in operation 1007, the electronic device (for example, the processor 120 and/or the security chipset 220) may transmit the signature data to the server. According to an embodiment, the security chipset 220 may transfer the signature data and the certificate to the processor 120, and the processor 120 may transmit the signature data and the certificate to the server 250 through the communication module 190. The certificate may be the certificate injected into the security chipset 220 during the process step of the security chipset 220.

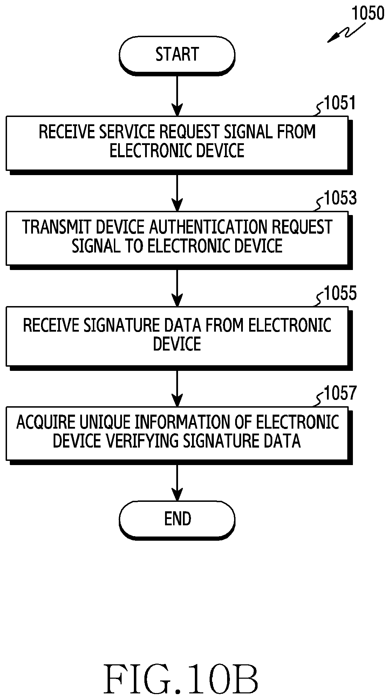

FIG. 10B is a flowchart 1050 illustrating a process in which the server proves integrity of unique information of the electronic device according to various embodiments. In the following embodiments, respective operations may be sequentially performed but the sequential performance is not necessary. For example, orders of the operations may be changed, and at least two operations may be performed in parallel. The server may be the server 250 of FIG. 2.

Referring to FIG. 10B, the server 250 according to various embodiments may receive a service request signal from the electronic device 101 in operation 1051. The service request signal may include unique information of the electronic device.

According to various embodiments, in operation 1053, the server 250 may transmit a device authentication request signal. For example, when receiving the service request signal from the electronic device 101, the server 250 may detect the need of authentication for the electronic device 101 and generate random challenge. The server 250 may transmit a device authentication request message including the generated random challenge to the electronic device 101.

According to various embodiments, in operation 1055, the server 250 may receive signature data from the electronic device 101. For example, the server 250 may receive signature data from the electronic device 101 in response to transmission of the device authentication request signal. According to an embodiment, the server 250 may receive the signature data along with a certificate.

According to various embodiments, in operation 1057, the server 250 may acquire unique information of the electronic device 101 by verifying the signature data. According to an embodiment, the server 250 may verify the signature data by using a certificate for a manufacturer issued by a reliable certificate authority (or a certificate issued by a manufacturer). When the signature data is successfully verified, the server 250 may compare the challenge transmitted to the electronic device in operation 1053 with the challenge included in the received signature data to determine whether the challenges are the same as each other. When challenge transmitted to the electronic device is the same as the challenge included in the received signature data, the he server 250 may acquire state information of the electronic device and unique information of the electronic device of which integrity is proved by the signature data. The server 250 may compare the acquired unique information of the electronic device with the unique information of the electronic device included in the service request signal by verifying the signature data. When two pieces of unique information of the electronic device are the same as each other on the basis of the comparison result, the server 250 may provide the service requested by the electronic device 101.

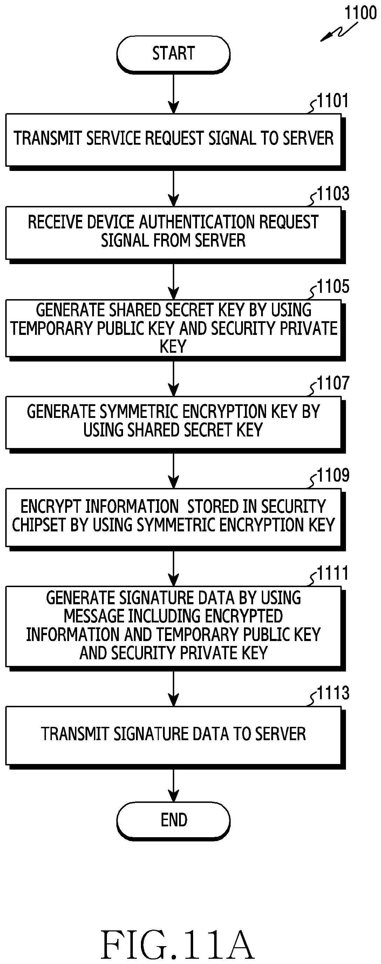

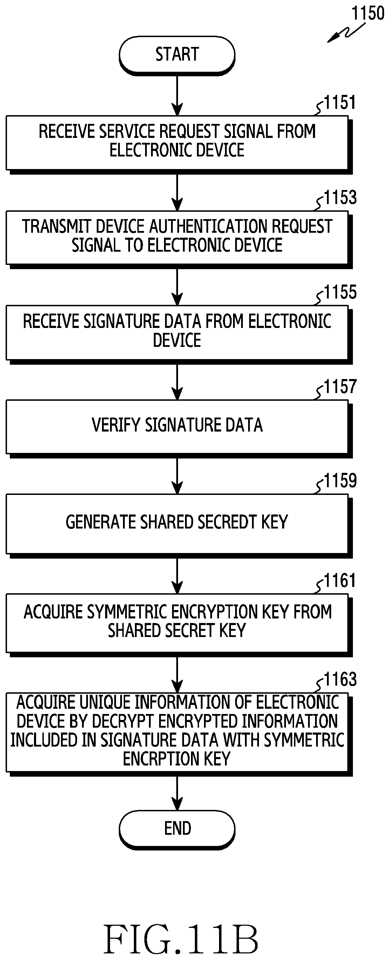

Hereinafter, FIGs. 11A and 11B illustrate an example of supporting end-to-end encryption between the server 250 and the security chipset 220 of the electronic device 101 when integrity of unique information of the electronic device is proved.

FIG. 11A is a flowchart 1100 illustrating a process in which the electronic device proves integrity of unique information of the electronic device according to various embodiments. At least some of the operations of FIG. 11A described below may be at least some of the detailed operations in operation 307 of FIG. 3. In the following embodiments, respective operations may be sequentially performed but the sequential performance is not necessary. For example, orders of the operations may be changed, and at least two operations may be performed in parallel. The electronic device may be the electronic device 101 of FIG. 2.

Referring to FIG. 11A, the electronic device (for example, the processor 120 of FIG. 2 and/or the security chipset 220 of FIG. 2) according to various embodiments may transmit a service request signal to a server (for example, the server 250 of FIG. 2) in operation 1101. The operation of transmitting the service request signal may be the same as operation 1001 of FIG. 10A.

According to various embodiments, in operation 1103, the electronic device (for example, the processor 120 and/or the security chipset 220) may receive a device authentication request signal from the server 250. For example, the processor 120 may receive a device authentication request signal in response to transmission of the service request signal. The device authentication request signal may include a temporary public key. The temporary public key may be a public key in a pair of temporary keys generated by the server 250. According to an embodiment, when receiving the device authentication request signal through a communication module (for example, the communication module 190 of FIG. 1), the processor 120 may acquire the temporary public key from the device authentication request signal through a security management application or another application which can access the security chipset 220. The processor 120 may transfer the authentication request signal including at least one of the temporary public keys acquired through the security management application to the security chipset 220.

According to various embodiments, in operation 1105, the electronic device (for example, the security chipset 220) may generate a shared secret key by using the temporary public key and a security private key. The security private key may be a private key in a pair of security keys injected into the security chipset 220 during the process step of the security chipset 220. The shared secret key may be generated using a diffie-hellman key agreement algorithm or an Elliptic curve diffie-hellman key agreement algorithm.

According to various embodiments, in operation 1107, the electronic device (for example, the security chipset 220) may generate a symmetric encryption key by using the shared secret key. For example, the security chipset 220 may derive the symmetric encryption key from the shared secret key by using a pre-appointed key derivation function with the server 250.

According to various embodiments, in operation 1109, the electronic device (for example, the security chipset 220) may encrypt information stored in the security chipset by using the symmetric encryption key. According to an embodiment, the security chipset 220 may encrypt at least one of the state information of the electronic device or the unique information of the electronic device stored in the security chipset with the symmetric encryption key and acquire encrypted information.

According to various embodiments, in operation 1111, the electronic device (for example, the security chipset 220) may generate signature data by using a message including the encrypted information and the temporary public key and the security private key. According to an embodiment, the security chipset 220 may generate signature data by signing a message including at least one of the encrypted information in operation 1109, the temporary public key acquired from the server 250, or the security public key with the security private key. The signature data may have various formats. For example, the signature data may be a certificate (for example, RFC5280 or X.509) format or a signed data (for example, PKCS#7, RFC5652) format. The security public key and the security private key may be a pair of security keys injected into the security chipset 220 during the process of the security chipset 220.

According to various embodiments, in operation 1113, the electronic device (for example, the processor 120 and/or the security chipset 220) may transmit signature data to the server. According to an embodiment, the security chipset 220 may transfer the signature data and the certificate to the processor 120, and the processor 120 may transmit the signature data and the certificate to the server 250 through the communication module 190. The certificate may be a certificate injected into the security chipset 220 during the process step of the security chipset 220.

FIG. 11B is a flowchart 1150 illustrating a process in which the server proves integrity of unique information of the electronic device according to various embodiments. In the following embodiments, respective operations may be sequentially performed but the sequential performance is not necessary. For example, orders of the operations may be changed, and at least two operations may be performed in parallel. The server may be the server 250 of FIG. 2.

Referring to FIG. 11B, the server (for example, the server 250 of FIG. 2) according to various embodiments may receive a service request signal from the electronic device 101 in operation 1151. The service request signal may include unique information of the electronic device.

According to various embodiments, in operation 1153, the server 250 may transmit a device authentication request signal. For example, when receiving the service request signal from the electronic device 101, the server 250 may detect the need of authentication for the electronic device 101 and generate pair of temporary random keys. The pair of temporary random keys may include a temporary public key and a temporary private key. The server 250 may transmit a device authentication request message including the temporary public key in the generated pair of temporary random keys to the electronic device 101.

According to various embodiments, in operation 1155, the server 250 may receive signature data from the electronic device 101. For example, the server 250 may receive signature data from the electronic device 101 in response to transmission of the device authentication request signal. According to an embodiment, the server 250 may receive the signature data along with a certificate.

According to various embodiments, in operation 1157, the server 250 may verify the signature data. According to an embodiment, the server 250 may verify the signature data by using a certificate for a manufacturer issued by a reliable certificate authority (or a certificate issued by a manufacturer).

According to various embodiments, in operation 1159, the server 250 may generate a shared secret key. According to an embodiment, the server 250 may acquire the security public key from the verified signature data and generated the shared secret key by using the acquired security public key and the temporary private key generated in operation 1153.

According to various embodiments, in operation 1161, the server 250 may acquire a symmetric encryption key from the shared secret key. For example, the server 250 may derive the symmetric encryption key from the shared secret key by using a pre-appointed key derivation function with the security chipset 220.

According to various embodiments, in operation 1163, the server 250 may decrypt encrypted information included in the signature data with the symmetric encryption key and acquire unique information of the electronic device 101. According to an embodiment, the server 250 may acquire the state information of the electronic device and the unique information of the electronic device of which integrity is proved by decrypting the encrypted information included in the signature data received from the electronic device with the symmetric encryption key. The server 250 may compare the unique information of the electronic device acquired in operation 1163 with the unique information of the electronic device included in the service request signal received in operation 1151. When two pieces of unique information of the electronic device are the same as each other on the basis of the comparison result, the server 250 may provide the service requested by the electronic device 101.

According to various embodiments, a method of operating the electronic device 101 may include an operation of injecting at least one authentication key and unique information of the electronic device into a security chipset (for example, the security chipset 220 of FIG. 2) configured to store a certificate and a pair of security keys corresponding to the certificate through a boot loader (for example, the boot loader 210 of FIG. 2), and controlling the security chipset 220 to generate signature data by using at least one of the at least one authentication key, the unique information of the electronic device 101, or the pair of security keys.

According to an embodiment, the unique information of the electronic device 101 may be injected into the security chipset 220 during a booting operation using the boot loader 210 and may be stored in a predetermined area within the security chipset 220.

According to an embodiment, the unique information of the electronic device 101 may include at least one of identification information of the processor, a universal flash storage (UFS) serial number (SN), a serial number of the electronic device, an embedded multimedia card serial number (eMMC SN), or an international mobile equipment identity (IMEI).

According to an embodiment, the operation of injecting the at least one authentication key and the unique information of the electronic device may include an operation of establishing a secure channel with the security chipset by using the at least one authentication key and an operation of injecting the unique information of the electronic device into the security chipset through the established secure channel.

According to an embodiment, the operation of injecting the at least one authentication key and the unique information of the electronic device may include an operation of establishing a secure channel between the boot loader 210 and the security chipset 220 by using a first authentication key during the booting operation and an operation of storing state information of the electronic device 101 in the security chipset 220 through the secure channel established between the boot loader 210 and the security chipset 220, and the state information of the electronic device 101 may include at least one of a verified boot state, information indicating whether the electronic device is locked, an operating system version, a patch time point, or a patch level.

According to an embodiment, the operation of injecting the at least one authentication key and the unique information of the electronic device may further include an operation of, when the booting operation is completed, sharing a second authentication key between a security management application and the security chipset 220, based on identification information of a processor 120.

According to an embodiment, the operation of injecting the at least one authentication key and the unique information of the electronic device may further include an operation of establishing a secure channel between the security management application and the security chipset 220 by using the shared second authentication key.

According to an embodiment, the operation of injecting the at least one authentication key and the unique information of the electronic device may include an operation of determining whether the electronic device 101 is in a normal state, based on the state information of the electronic device 101 stored in the security chipset 220 and an operation of, when the electronic device 101 is in the normal state, storing the unique information of the electronic device 101 in a predetermined area within the security chipset 220.

According to an embodiment, the operation of the controlling the security chipset 220 to generate the signature data may include an operation of transmitting a service request signal to a server (for example, the server 250 of FIG. 2) and receiving device authentication request signal from the server 250, and an operation of generating signature data by signing a message including the unique information of the electronic device 101 with a private key in the pair of security keys by the security chipset 220 in response to the device authentication request signal.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.   An electronic device comprising:

   a security chipset configured to store a certificate and a pair of security keys corresponding to the certificate;
   a processor operatively connected to the security chipset; and
   a memory operatively connected to the processor,
   wherein the memory stores instructions, when executed, causing the processor to:

      provide at least one authentication key and unique information of the electronic device into the security chipset through a boot loader, and
      control the security chipset to generate signature data by using at least one of the at least one provided authentication key, the provided unique information of the electronic device, or the pair of security keys,
      wherein the unique information of the electronic device is signed using a private key of the pair of security keys corresponding to the certificate stored in the security chipset.

2.   The electronic device of claim 1, wherein the instructions cause the processor to provide the unique information of the electronic device into the security chipset during a booting operation using the boot loader, and
   wherein the unique information of the electronic device is stored in a predetermined area within the security chipset.

3.   The electronic device of claim 1, wherein the instructions cause the processor to:

   establish a secure channel with the security chipset by using the at least one authentication key, and

provide the unique information of the electronic device into the security chipset through the established secure channel.

4. The electronic device of claim 3, wherein the instructions cause the processor to:

establish a secure channel between the boot loader and the security chipset by using a first authentication key during the booting operation, and
provide state information of the electronic device to the security chipset through the secure channel established between the boot loader and the security chip set,
wherein the security chipset is configured to store the state information of the electronic device in the security chipset, and
wherein the state information of the electronic device comprises at least one of a verified boot state, information indicating whether the electronic device is locked, an operating system version, a patch time point, or a patch level.

5. The electronic device of claim 4, wherein, when the booting operation is completed, the instructions cause the processor to:

share a second authentication key with the security chipset, based on identification information of the processor through a security management application,
establish a secure channel between the security management application and the security chipset by using the shared second authentication key, and
provide the unique information of the electronic device to the security chipset through the secure channel established between the security management application and the security chipset.

6. The electronic device of claim 5, wherein the instructions cause the processor to:

generate a first pair of temporary keys through the security management application, and
provide a first temporary public key in the generated first pair of temporary keys to the security chipset, and
wherein the security chipset is configured to:

generate a second pair of temporary keys including a second temporary public key and a second temporary private key,
generate the second authentication key, based on at least one of the first temporary public key, the second temporary public key, identification information of the processor, or identification information of the security chipset,
acquire a first receipt to be used for verifying the second authentication key by using the generated second authentication key, and
provide at least one of the first receipt, the identification information of the security chipset, or the second temporary public key generated by the security chipset to the processor.

7. The electronic device of claim 6, wherein the instructions cause the processor to:

receive at least one of the first receipt, the identification information of the security chipset, or the second temporary public key generated by the security chipset from the security chipset,
generate the second authentication key, based on at least one of the second temporary public key, the identification information of the processor, or the identification information of the security chipset,
acquire a second receipt corresponding to the generated second authentication key, and
determine whether the second authentication is successfully shared with the security chipset by comparing the received first receipt and the second receipt.

8. The electronic device of claim 5, wherein, when the unique information of the electronic device is received from the processor, the security chipset is configured to:

determine whether the electronic device is in a normal state, based on the state information of the electronic device stored in the security chipset, and
when the electronic device is in the normal state, store the unique information of the electronic device in a predetermined area within the security chipset.

9. The electronic device of claim 1, further comprising a communication module operatively connected to the processor, wherein the instructions cause the processor to:

transmit a service request signal to a server through the communication module,
receive a device authentication request signal from the server through the communication module, and
make a request for generating signature data to the security chipset, and
wherein the security chipset is configured to generate signature data by signing a message including the unique information of the electronic device with a private key in the pair of security keys.

10. The electronic device of claim 9, wherein the instructions cause the processor to control the communication module to transmit the signature data generated by the security chipset to the server.

11. A method of operating an electronic device, the method comprising:

providing at least one authentication key and unique information of the electronic device into a security chipset configured to store a certificate and a pair of security keys corresponding to the certificate through a boot loader; and
controlling the security chipset to generate signature data by using at least one of the at least one authentication key, the unique information of the electronic device, or the pair of security keys,
wherein the unique information of the electronic device is signed using a private key of the pair of security keys corresponding to the certificate stored in the security chipset.

12. The electronic device of claim 1 or the method of claim 11, wherein the unique information of the electronic device is provided into the security chipset during a booting operation using the boot loader and is stored in a predetermined area within the security chipset, and
wherein the predetermined area within the security chipset comprises an area having attributes corresponding to impossibility of deletion or change of stored information.

13. The electronic device of claim 1 or the method of claim 11, wherein the unique information of the electronic device comprises at least one of identification information of a processor, a universal flash storage (UFS) serial number (SN), a serial number of the electronic device, an embedded multimedia card serial number (eMMC SN), or an international mobile equipment identity (IMEI).

14. The method of claim 11, wherein the providing the at least one authentication key and the unique information of the electronic device into the security chipset further comprises:

establishing a secure channel with the security chipset by using the at least one authentication key; and
providing the unique information of the electronic device into the security chipset through the established secure channel.

15. The method of claim 11, wherein the providing the at least one authentication key and the unique information of the electronic device into the security chipset further comprises:

establishing a secure channel between the boot loader and the security chipset by using a first authentication key during the booting operation; and
storing state information of the electronic device in the security chipset through the secure channel established between the boot loader and the security chipset, and
the state information of the electronic device comprises at least one of a verified boot state, information indicating whether the electronic device is locked, an operating system version, a patch time point, or a patch level.

**Patentansprüche**

1. Elektronische Vorrichtung, die Folgendes umfasst:

einen Sicherheits-Chipsatz, der konfiguriert ist, um ein Zertifikat und ein dem Zertifikat entsprechendes Paar von Sicherheitsschlüsseln zu speichern;
einen Prozessor, der mit dem Sicherheits-Chipsatz wirkverbunden ist; und

einen Speicher, der mit dem Prozessor wirkverbunden ist,
wobei der Speicher Anweisungen speichert, die, wenn sie ausgeführt werden, den Prozessor zu Folgendem veranlassen:

Bereitstellen mindestens eines Authentifizierungsschlüssels und eindeutiger Informationen der elektronischen Vorrichtung über einen Bootloader in dem Sicherheits-Chipsatz, und
Steuern des Sicherheits-Chipsatzes, um Signaturdaten unter Verwenden des mindestens einen bereitgestellten Authentifizierungsschlüssels, der bereitgestellten eindeutigen Informationen der elektronischen Vorrichtung und/oder des Paars von Sicherheitsschlüsseln zu erzeugen,
wobei die eindeutigen Informationen der elektronischen Vorrichtung unter Verwenden eines privaten Schlüssels des Paars von Sicherheitsschlüsseln signiert werden, die dem Zertifikat entsprechen, das in dem Sicherheits-Chipsatz gespeichert ist.

2. Elektronische Vorrichtung nach Anspruch 1, wobei die Anweisungen den Prozessor veranlassen, die eindeutigen Informationen der elektronischen Vorrichtung während eines Bootvorgangs unter Verwenden des Bootloaders in dem Sicherheits-Chipsatz bereitzustellen, und
wobei die eindeutigen Informationen der elektronischen Vorrichtung in einem vorbestimmten Bereich innerhalb des Sicherheits-Chipsatzes gespeichert sind.

3. Elektronische Vorrichtung nach Anspruch 1, wobei die Anweisungen den Prozessor zu Folgendem veranlassen:

Aufbauen eines sicheren Kanals mit dem Sicherheits-Chipsatz unter Verwenden des mindestens einen Authentifizierungsschlüssels, und
Bereitstellen der eindeutigen Informationen der elektronischen Vorrichtung über den aufgebauten sicheren Kanal in dem Sicherheits-Chipsatz.

4. Elektronische Vorrichtung nach Anspruch 3, wobei die Anweisungen den Prozessor zu Folgendem veranlassen:

Aufbauen eines sicheren Kanals zwischen dem Bootloader und dem Sicherheits-Chipsatz unter Verwenden eines ersten Authentifizierungsschlüssels während des Bootvorgangs, und
Bereitstellen von Zustandsinformationen der elektronischen Vorrichtung an den Sicherheits-Chipsatz über den sicheren Kanal, der zwischen dem Bootloader und dem Sicherheits-Chipsatz aufgebaut ist,
wobei der Sicherheits-Chipsatz konfiguriert ist, um die Zustandsinformationen der elektronischen Vorrichtung in dem Sicherheits-Chipsatz zu speichern, und
wobei die Zustandsinformationen der elektronischen Vorrichtung einen verifizierten Bootzustand, Informationen, die anzeigen, ob die elektronische Vorrichtung gesperrt ist, eine Betriebssystemversion, einen Patch-Zeitpunkt und/oder ein Patch-Level umfassen.

5. Elektronische Vorrichtung nach Anspruch 4, wobei, wenn der Bootvorgang abgeschlossen ist, die Anweisungen den Prozessor zu Folgendem veranlassen:

Teilen eines zweiten Authentifizierungsschlüssels mit dem Sicherheits-Chipsatz basierend auf Identifikationsinformationen des Prozessors über eine Sicherheitsmanagementanwendung,
Aufbauen eines sicheren Kanals zwischen der Sicherheitsmanagementanwendung und dem Sicherheits-Chipsatz unter Verwenden des geteilten zweiten Authentifizierungsschlüssels, und
Bereitstellen der eindeutigen Informationen der elektronischen Vorrichtung an den Sicherheits-Chipsatz über den sicheren Kanal, der zwischen der Sicherheitsmanagementanwendung und dem Sicherheits-Chipsatz aufgebaut ist.

6. Elektronische Vorrichtung nach Anspruch 5, wobei die Anweisungen den Prozessor zu Folgendem veranlassen:

Erzeugen eines ersten Paars von temporären Schlüsseln über die Sicherheitsmanagementanwendung, und
Bereitstellen eines ersten temporären öffentlichen Schlüssels in dem erzeugten ersten Paar von temporären Schlüsseln an den Sicherheits-Chipsatz, und
wobei der Sicherheits-Chipsatz konfiguriert ist zum:

Erzeugen eines zweiten Paars von temporären Schlüsseln einschließlich eines zweiten temporären öffentlichen Schlüssels und eines zweiten temporären privaten Schlüssels,

Erzeugen des zweiten Authentifizierungsschlüssels basierend auf dem ersten temporären öffentlichen Schlüssel, dem zweiten temporären öffentlichen Schlüssel, Identifikationsinformationen des Prozessors und/oder Identifikationsinformationen des Sicherheits-Chipsatzes,

Erhalten eines ersten Nachweises, der zur Verifizierung des zweiten Authentifizierungsschlüssels unter Verwenden des erzeugten zweiten Authentifizierungsschlüssels verwendet werden soll, und

Bereitstellen des ersten Nachweises, der Identifikationsinformationen des Sicherheits-Chipsatzes und/oder des von dem Sicherheits-Chipsatz erzeugten zweiten temporären öffentlichen Schlüssels an den Prozessor.

7. Elektronische Vorrichtung nach Anspruch 6, wobei die Anweisungen den Prozessor zu Folgendem veranlassen:

Empfangen des ersten Nachweises, der Identifikationsinformationen des Sicherheits-Chipsatzes und/oder des von dem Sicherheits-Chipsatz erzeugten zweiten temporären öffentlichen Schlüssels von dem Sicherheits-Chipsat,

Erzeugen des zweiten Authentifizierungsschlüssels basierend auf dem zweiten temporären öffentlichen Schlüssel, den Identifikationsinformationen des Prozessors und/oder den Identifikationsinformationen des Sicherheits-Chipsatzes,

Erhalten eines zweiten Nachweises, der dem erzeugten zweiten Authentifizierungsschlüssel entspricht, und

Bestimmen, ob die zweite Authentifizierung mit dem Sicherheits-Chipsatz erfolgreich geteilt wurde, durch Vergleichen des empfangenen ersten Nachweises und des zweiten Nachweises.

8. Elektronische Vorrichtung nach Anspruch 5, wobei, wenn die eindeutigen Informationen der elektronischen Vorrichtung von dem Prozessor empfangen werden, der Sicherheits-Chipsatz konfiguriert ist zum:

Bestimmen, ob sich die elektronische Vorrichtung in einem Normalzustand befindet, basierend auf den Zustandsinformationen der elektronischen Vorrichtung, die in dem Sicherheits-Chipsatz gespeichert sind, und wenn sich die elektronische Vorrichtung in dem Normalzustand befindet, Speichern der eindeutigen Informationen der elektronischen Vorrichtung in einem vorbestimmten Bereich innerhalb des Sicherheits-Chipsatzes.

9. Elektronische Vorrichtung nach Anspruch 1, die ferner ein Kommunikationsmodul umfasst, das mit dem Prozessor wirkverbunden ist, wobei die Anweisungen den Prozessor zu Folgendem veranlassen:

Übertragen eines Dienstanforderungssignals über das Kommunikationsmodul an einen Server,

Empfangen eines Vorrichtungsauthentifizierungsanforderungssignals über das Kommunikationsmodul von dem Server, und

Stellen eines Antrags zum Erzeugen von Signaturdaten an den Sicherheits-Chipsatz, und wobei der Sicherheits-Chipsatz konfiguriert ist, um Signaturdaten durch Signieren einer Nachricht, die die eindeutigen Informationen der elektronischen Vorrichtung enthält, mit einem privaten Schlüssel in dem Paar von Sicherheitsschlüsseln zu erzeugen.

10. Elektronische Vorrichtung nach Anspruch 9, wobei die Anweisungen den Prozessor veranlassen, das Kommunikationsmodul zu steuern, um die von dem Sicherheits-Chipsatz erzeugten Signaturdaten an den Server zu übertragen.

11. Verfahren zum Betreiben einer elektronischen Vorrichtung, wobei das Verfahren Folgendes umfasst:

Bereitstellen mindestens eines Authentifizierungsschlüssels und eindeutiger Informationen der elektronischen Vorrichtung in einem Sicherheits-Chipsatz, der konfiguriert ist, um ein Zertifikat und ein Paar von Sicherheitsschlüsseln, die dem Zertifikat entsprechen, über einen Bootloader zu speichern; und

Steuern des Sicherheits-Chipsatzes, um Signaturdaten unter Verwenden des mindestens einen Authentifizierungsschlüssels, der eindeutigen Informationen der elektronischen Vorrichtung und/oder des Paars von Sicherheitsschlüsseln zu erzeugen,

wobei die eindeutigen Informationen der elektronischen Vorrichtung unter Verwenden eines privaten Schlüssels des Paars von Sicherheitsschlüsseln signiert werden, die dem in dem Sicherheits-Chipsatz gespeicherten Zertifikat entsprechen.

12. Elektronische Vorrichtung nach Anspruch 1 oder Verfahren nach Anspruch 11, wobei die eindeutigen Informationen der elektronischen Vorrichtung während eines Bootvorgangs in dem Sicherheits-Chipsatz unter Verwenden des Bootloaders bereitgestellt werden und in einem vorbestimmten Bereich innerhalb des Sicherheits-Chipsatzes gespeichert werden, und

wobei der vorbestimmte Bereich innerhalb des Sicherheits-Chipsatzes einen Bereich mit Attributen umfasst, die der Unmöglichkeit der Löschung oder Änderung von gespeicherten Informationen entsprechen.

**13.** Elektronische Vorrichtung nach Anspruch 1 oder Verfahren nach Anspruch 11, wobei die eindeutigen Informationen der elektronischen Vorrichtung Identifikationsinformationen eines Prozessors, eine universelle Flash-Speicher(UFS)-Seriennummer (SN), eine Seriennummer der elektronischen Vorrichtung, eine eingebettete Multimediakartenseriennummer (eMMCSN) und/oder eine internationale Mobilfunkgerätekennung (IMEI) umfassen.

**14.** Verfahren nach Anspruch 11, wobei das Bereitstellen des mindestens einen Authentifizierungsschlüssels und der eindeutigen Informationen der elektronischen Vorrichtung in dem Sicherheits-Chipsatz ferner Folgendes umfasst:

Aufbauen eines sicheren Kanals mit dem Sicherheits-Chipsatz unter Verwenden des mindestens einen Authentifizierungsschlüssels; und

Bereitstellen der eindeutigen Informationen der elektronischen Vorrichtung in dem Sicherheits-Chipsatz über den aufgebauten sicheren Kanal.

**15.** Verfahren nach Anspruch 11, wobei das Bereitstellen des mindestens einen Authentifizierungsschlüssels und der eindeutigen Informationen der elektronischen Vorrichtung in dem Sicherheits-Chipsatz ferner Folgendes umfasst:

Aufbauen eines sicheren Kanals zwischen dem Bootloader und dem Sicherheits-Chipsatz unter Verwenden eines ersten Authentifizierungsschlüssels während des Bootvorgangs; und

Speichern von Zustandsinformationen der elektronischen Vorrichtung in dem Sicherheits-Chipsatz über den sicheren Kanal, der zwischen dem Bootloader und dem Sicherheits-Chipsatz aufgebaut ist, und

wobei die Zustandsinformationen der elektronischen Vorrichtung einen verifizierten Bootzustand, Informationen, die anzeigen, ob die elektronische Vorrichtung gesperrt ist, eine Betriebssystemversion, einen Patch-Zeitpunkt und/oder ein Patch-Level umfassen.

## Revendications

**1.** Dispositif électronique comprenant :

un jeu de puces de sécurité configuré pour stocker un certificat et une paire de clés de sécurité correspondant au certificat ;

un processeur connecté de manière opérationnelle au jeu de puces de sécurité ; et

une mémoire connectée de manière opérationnelle au processeur,

où la mémoire stocke des instructions qui, lorsqu'elles sont exécutées, amènent le processeur à :

fournir au moins une clé d'authentification et des informations uniques du dispositif électronique au jeu de puces de sécurité à travers un chargeur de démarrage, et

commander au jeu de puces de sécurité de générer des données de signature en utilisant au moins l'une entre l'au moins une clé d'authentification fournie, les informations uniques du dispositif électronique fournies ou la paire de clés de sécurité,

où les informations uniques du dispositif électronique sont signées utilisant une clé privée de la paire de clés de sécurité correspondant au certificat stocké dans le jeu de puces de sécurité.

**2.** Dispositif électronique selon la revendication 1, où les instructions amènent le processeur à fournir les informations uniques du dispositif électronique au jeu de puces de sécurité pendant une opération de démarrage utilisant le chargeur de démarrage, et

où les informations uniques du dispositif électronique sont stockées dans une zone prédéterminée dans le jeu de puces de sécurité.

**3.** Dispositif électronique selon la revendication 1, où les instructions amènent le processeur à :

établir un canal sécurisé avec le jeu de puces de sécurité en utilisant l'au moins une clé d'authentification, et

fournir les informations uniques du dispositif électronique au jeu de puces de sécurité à travers le canal sécurisé établi.

**4.** Dispositif électronique selon la revendication 3, où les instructions amènent le processeur à :

établir un canal sécurisé entre le chargeur de démarrage et le jeu de puces de sécurité en utilisant une première clé d'authentification pendant l'opération de démarrage, et
fournir des informations de l'état du dispositif électronique au jeu de puces de sécurité à travers le canal sécurisé établi entre le chargeur de démarrage et le jeu de puces de sécurité,
où le jeu de puces de sécurité est configuré pour stocker les informations de l'état du dispositif électronique dans le jeu de puces de sécurité, et
où les informations de l'état du dispositif électronique comprennent au moins l'un entre un état de démarrage vérifié, des informations indiquant si le dispositif électronique est verrouillé, une version du système d'exploitation, un point temporel de correctif ou un niveau de correctif.

**5.** Dispositif électronique selon la revendication 4, où, lorsque l'opération de démarrage est terminée, les instructions amènent le processeur à :

partager une deuxième clé d'authentification avec le jeu de puces de sécurité, sur la base d'informations d'identification du processeur à travers une application de gestion de sécurité,
établir un canal sécurisé entre l'application de gestion de sécurité et le jeu de puces de sécurité en utilisant la deuxième clé d'authentification partagée, et
fournir les informations uniques du dispositif électronique au jeu de puces de sécurité à travers le canal sécurisé établi entre l'application de gestion de sécurité et le jeu de puces de sécurité.

**6.** Dispositif électronique selon la revendication 5, où les instructions amènent le processeur à :

générer une première paire de clés temporaires à travers l'application de gestion de sécurité, et
fournir une première clé publique temporaire dans la première paire de clés temporaires générée au jeu de puces de sécurité, et
où le jeu de puces de sécurité est configuré pour :

générer une deuxième paire de clés temporaires incluant une deuxième clé publique temporaire et une deuxième clé privée temporaire,
générer la deuxième clé d'authentification, sur la base d'au moins l'une parmi la première clé publique temporaire, la deuxième clé publique temporaire, les informations d'identification du processeur, ou les informations d'identification du jeu de puces de sécurité,
acquérir un premier reçu pour être utilisé pour vérifier la deuxième clé d'authentification en utilisant la deuxième clé d'authentification générée, et
fournir au moins l'un parmi le premier reçu, les informations d'identification du jeu de puces de sécurité, ou la deuxième clé publique temporaire générée par le jeu de puces de sécurité au processeur.

**7.** Dispositif électronique selon la revendication 6, où les instructions amènent le processeur à :

recevoir au moins l'un parmi le premier reçu, les informations d'identification du jeu de puces de sécurité, ou la deuxième clé publique temporaire générée par le jeu de puces de sécurité du jeu de puces de sécurité,
générer la deuxième clé d'authentification, sur la base d'au moins l'une parmi les clés publiques temporaires, les informations d'identification du processeur, ou les informations d'identification du jeu de puces de sécurité,
acquérir un deuxième reçu correspondant à la deuxième clé d'authentification générée, et
déterminer si la deuxième authentification est partagée avec succès avec le jeu de puces de sécurité en comparant le premier reçu reçu et le deuxième reçu.

**8.** Dispositif électronique selon la revendication 5, où, lorsque les informations uniques du dispositif électronique sont reçues du processeur, le jeu de puces de sécurité est configuré pour :

déterminer si le dispositif électronique est dans un état normal, sur la base des informations de l'état du dispositif électronique stockées dans le jeu de puces de sécurité, et
lorsque le dispositif électronique est dans l'état normal, stocker les informations uniques du dispositif électronique dans une zone prédéterminée du jeu de puces de sécurité.

**9.** Dispositif électronique selon la revendication 1, comprenant en outre un module de communication connecté de manière opérationnelle au processeur, où les instructions amènent le processeur à :

transmettre un signal de demande de service à un serveur à travers le module de communication,
recevoir un signal de demande d'authentification du dispositif du serveur à travers le module de communication, et
faire une demande de génération de données de signature au jeu de puces de sécurité, et
où le jeu de puces de sécurité est configuré pour générer des données de signature en signant un message incluant les informations uniques du dispositif électronique avec une clé privée dans la paire de clés de sécurité.

10. Dispositif électronique selon la revendication 9, où les instructions amènent le processeur à commander au module de communication de transmettre au serveur les données de signature générées par le jeu de puces de sécurité.

11. Procédé d'exploitation d'un dispositif électronique, le procédé comprenant :

fournir au moins l'une entre une clé d'authentification et des informations uniques du dispositif électronique à un jeu de puces de sécurité configuré pour stocker un certificat et une paire de clés de sécurité correspondantes au certificat à travers un chargeur de démarrage ; et
commander au jeu de puces de sécurité de générer des données de signature en utilisant au moins l'une entre l'au moins une clé d'authentification, les informations uniques du dispositif électronique ou la paire de clés de sécurité,
où les informations uniques du dispositif électronique sont signées utilisant une clé privée de la paire de clés de sécurité correspondant au certificat stocké dans le jeu de puces de sécurité.

12. Dispositif électronique selon la revendication 1 ou procédé selon la revendication 11, où les informations uniques du dispositif électronique sont fournies au jeu de puces de sécurité pendant une opération de démarrage utilisant le chargeur de démarrage et sont stockées dans une zone prédéterminée du jeu de puces de sécurité, et
où la zone prédéterminée du jeu de puces de sécurité comprend une zone ayant des attributs correspondant à l'impossibilité de supprimer ou de modifier les informations stockées.

13. Dispositif électronique selon la revendication 1 ou procédé selon la revendication 11, où les informations uniques du dispositif électronique comprennent au moins l'un parmi des informations d'identification d'un processeur, un numéro de série (SN) de stockage flash universel (UFS), un numéro de série du dispositif électronique, un numéro de série de carte multimédia intégrée (eMMCSN) ou une identité internationale d'équipement mobile (IMEI).

14. Procédé selon la revendication 11, où la fourniture de l'au moins une clé d'authentification et des informations uniques du dispositif électronique dans le jeu de puces de sécurité comprend en outre :

établir un canal sécurisé avec le jeu de puces de sécurité en utilisant l'au moins une clé d'authentification ; et
fournir les informations uniques du dispositif électronique au jeu de puces de sécurité à travers le canal sécurisé établi.

15. Procédé selon la revendication 11, où la fourniture de l'au moins une clé d'authentification et des informations uniques du dispositif électronique au jeu de puces de sécurité comprend en outre :

établir un canal sécurisé entre le chargeur de démarrage et le jeu de puces de sécurité en utilisant une première clé d'authentification pendant l'opération de démarrage ; et
stocker des informations de l'état du dispositif électronique dans le jeu de puces de sécurité à travers le canal sécurisé établi entre le chargeur de démarrage et le jeu de puces de sécurité, et
les informations de l'état du dispositif électronique comprennent au moins l'un parmi un état de démarrage vérifié, des informations indiquant si le dispositif électronique est verrouillé, une version du système d'exploitation, un point temporel correctif ou un niveau correctif.

FIG.1

FIG.2

300

START

↓

301
STORE AT LEAST ONE AUTHENTICATION KEY IN
SECURITY CHIPSET BY USING BOOT LOADER

↓

303
ESTABLISH SECURE CHANNEL BY USING AT LEAST
ONE AUTHENTICATION KEY

↓

305
STORE UNIQUE INFORMATION OF ELECTRONIC
DEVICE IN SECURITY CHIPSET THROUGH
ESTABLISHED SECURE CHANNEL

↓

307
GENERATE SIGNATURE DATA BY USING UNIQUE
INFORMATION OF ELECTRONIC DEVICE STORED IN
SECURITY CHIPSET AND INJECTED SECURITY KEY

↓

END

# FIG.3

400

START

401

INITIAL BOOTING?　　　NO

YES

403

STORE PROCESSOR IDENTIFICATION
INFORMATION AND BOOT LOADER
AUTHENTICATION KEY IN SECURITY
CHIPSET THROUGH BOOT LOADER

405

ESTABLISH SECURE CHANNEL FOR
SECURITY CHIPSET BY USING BOOT
LOADER AUTHENTICATION KEY

407

STORE STATE INFORMATION OF
ELECTRONIC DEVICE IN SECURITY
CHIPSET THROUGH SECURE CHANNEL

END

FIG.4

500

Processor (120)

| Boot Loader (210) | First APIs (502) |
|---|---|

Security Chipset (220)

Processor Identification Information And Boot Loader Authentication Key(510)

Processor Identification Information And Boot Loader Authentication Key (512)

Perform Procedure Of Identifying Boot Loader Authentication Key (514)

Store Processor Identification Information And Boot Loader Authentication Key (516)

Establish Secure Channel By Using Boot Loader Authentication Key (518)

State Information Of Electronic Device (520)

Store State Information Of Electronic Device (522)

FIG.5

600

START

601

DETECT COMPLETION OF INITIAL BOOTING

603

SHARE AND VERIFY MANAGER AUTHENTICATION
KEY WITH SECURITY CHIPSET BY USING SECURITY
MANAGEMENT APP

605

STORE MANAGER AUTHENTICATION KEY IN
SECURITY CHIPSET

END

FIG.6

700

Processor (120)

REE (710)

Security
Management
Demon (712)

Security Management APP (720)

Second APIs (722)

Third APIs (724)

Security Chipset (220)

Make Request For
Starting Sharing Manager
Authentication Key
(Processor Identification
Information) (730)

Make Request
For Starting
Sharing Manager
Authentication
Key (732)

Generate First Pair
Of Temporary Keys
(734)

Make Request For Sharing Manager
Authentication Key
(First Temporary Public Key) (736)

Identify State Information
Of Electronic Device
(738)

Generate Second Pair Of
Temporary Keys (740)

Generate Manager
Authentication Key By
Using First Temporary
Public Key (742)

Calculate First Receipt By
Using Manager
Authentication Key (744)

Response To Sharing Of
Manager Authentication Key
(Second Temporary Public Key,
Security Chipset Identification
Information, And First Receipt)
(746)

Generate Manager Authentication
Key By Using Second Temporary
Public Key And First Temporary
Private Key (748)

FIG.7A

701

FIG.7B

800

START

↓

801

ESTABLISH SECURITY CHANNEL WITH SECURITY CHIPSET BY USING MANAGER AUTHENTICATION KEY

↓

803

STORE UNIQUE INFORMATION OF ELECTRONIC DEVICE IN SECURITY CHIPSET THROUGH SECURE CHANNEL

↓

END

# FIG.8

900

Processor (120)

Security
Management Demon
(810)

Security
Management APP
(820)

Security Chipset
(220)

Unique Information Of
Electronic Device (910)

Establish Secure Channel By Using Manager
Authentication Key (912)

Unique Information Of Electronic Device
(914)

Identify State Information
Of Electronic Device
(916)

Store Unique Information
Of Electronic Device
(918)

FIG.9

1000

START

TRANSMIT SERVICE REQUEST SIGNAL TO SERVER ⟋1001

RECEIVE DEVICE AUTHENTICATION REQUEST SIGNAL FROM SERVER ⟋1003

GENERATE SIGNATURE DATA BY USING INFORMATION STORED IN SECURITY CHIPSET AND SECURITY KEY ⟋1005

TRANSMIT SIGNATURE DATA TO SERVER ⟋1007

END

# FIG.10A

FIG.10B

1100

START

↓

1101

TRANSMIT SERVICE REQUEST SIGNAL TO SERVER

↓

1103

RECEIVE DEVICE AUTHENTICATION REQUEST SIGNAL FROM SERVER

↓

1105

GENERATE SHARED SECRET KEY BY USING TEMPORARY PUBLIC KEY AND SECURITY PRIVATE KEY

↓

1107

GENERATE SYMMETRIC ENCRYPTION KEY BY USING SHARED SECRET KEY

↓

1109

ENCRYPT INFORMATION STORED IN SECURITY CHIPSET BY USING SYMMETRIC ENCRYPTION KEY

↓

1111

GENERATE SIGNATURE DATA BY USING MESSAGE INCLUDING ENCRYPTED INFORMATION AND TEMPORARY PUBLIC KEY AND SECURITY PRIVATE KEY

↓

1113

TRANSMIT SIGNATURE DATA TO SERVER

↓

END

# FIG.11A

1150

START

1151
RECEIVE SERVICE REQUEST SIGNAL FROM
ELECTRONIC DEVICE

1153
TRANSMIT DEVICE AUTHENTICATION REQUEST
SIGNAL TO ELECTRONIC DEVICE

1155
RECEIVE SIGNATURE DATA FROM ELECTRONIC
DEVICE

1157
VERIFY SIGNATURE DATA

1159
GENERATE SHARED SECREDT KEY

1161
ACQUIRE SYMMETRIC ENCRYPTION KEY FROM
SHARED SECRET KEY

1163
ACQUIRE UNIQUE INFORMATION OF ELECTRONIC
DEVICE BY DECRYPT ENCRYPTED INFORMATION
INCLUDED IN SIGNATURE DATA WITH SYMMETRIC
ENCRPTION KEY

END

FIG.11B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019166116 A1
- US 2018097639 A1